# EUROPEAN PATENT APPLICATION

(11) **EP 4 693 148 A1**
(43) Date of publication of application: **11.02.2026**
(21) Application number: 24792994.6
(22) Date of filing: 17.04.2024
(51) Int. Cl.: G06Q 30/06, G09F 3/20, G09F 9/33, G06Q 10/08, G06V 10/74, G06V 10/12, G06Q 50/10

(54) **METHOD AND SYSTEM FOR PROVIDING EVENT INFORMATION RELATED TO ELECTRONIC SHELF LABEL**

(30) Priority: 19.04.2023 KR 20230051533; 19.04.2023 KR 20230051534
(71) Applicant: SOLUM CO., LTD., Gyeonggi-do 16914 (KR)
(72) Inventor: LEE, Seo Jin, Yongin-si, Gyeonggi-do 16914 (KR)
(74) Representative: South, Nicholas Geoffrey
(86) International application number: PCT/KR2024/005133
(87) International publication number: WO 2024/219809

(57) **Abstract**

Provided in one embodiment is a method by which a processor of a computing device linked to an electronic shelf label provides event information related to the electronic shelf label, performed by a processor of a computing device linked to the electronic shelf label, comprising the steps of: acquiring a captured image by capturing an LED included in the electronic shelf label; identifying a light emission pattern of the LED on the basis of the captured image; and providing information about an event related to the electronic shelf label, which corresponds to the identified light emission pattern of the LED.

## Description

### [Technical Field]

The present disclosure relates to a method and system for providing event information related to an electronic shelf label.

### [Background Art]

Electronic labels are increasingly being used in applications such as displaying product information on store shelves. Electronic labels, also known as electronic shelf labels or electronic tags, connect to a server via a gateway, receive product information, and display the received information on an electronic paper display. The use of electronic labels is expanding due to their low-power operation, which allows for extended battery life, and the ability to change display information via a communication network, which reduces store management labor costs.

When a new product is placed on a shelf, a process of assigning an electronic label to display information on the product is required. Typically, a store manager uses a terminal to read the barcode attached to the electronic label, then reads the product barcode and transmits the same to a server. The server then assigns the electronic label to the product, registers the same in a database, and transmits the product information to the electronic label, processing the change in display.

A plurality of electronic labels corresponding to a plurality of products can be provided on shelves displaying the plurality of products. Various events may occur with respect to electronic labels, but it would be inefficient for store staff to individually check all events (e.g., low battery, out-of-stock items, etc.) for the electronic labels to respond to the events.

Incidentally, shelves with electronic labels may contain different types of products that are not assigned to electronic labels, or may be empty due to products being out of stock. In such cases, on-site store staff can return the products to right positions to which electronic labels to which the products are assigned are attached or restock empty spaces on the shelves. However, it is difficult and inefficient for on-site staff to regularly monitor product display to correct product misplacement or restock out-of-stock items. If product misplacement persists for an extended period of time and out-of-stock items are not rapidly replenished, store users may have difficulty finding the product they want. This may result in a decline in store sales.

### [Disclosure]

### [Technical Problem]

Various embodiments of the present disclosure provide a method and system for providing event information related to an electronic shelf label based on identification of a light emission pattern of an LED included in the electronic shelf label.

Various embodiments of the present disclosure provide a method and system for providing event information related to an electronic shelf label, which can provide information on various events based on identification of a plurality of different light emission patterns of LEDs corresponding to different events with respect to electronic shelf labels.

Various embodiments of the present disclosure provide a method and system for providing product-related information using an LED of an electronic shelf label, which provides product-related information based on an image obtained by capturing an area where an electronic shelf label and a product are placed on a shelf and a light emission pattern of an LED included in the electronic shelf label.

Various embodiments of the present disclosure provide a method and system for providing product-related information using an LED of an electronic shelf label, which provides product-related information based on identification of a light emission pattern of an LED of an electronic shelf label provided on a shelf.

### [Technical Solution]

One embodiment provides:
a method of providing event information related to an electronic shelf label, performed by a processor of a computing device linked to the electronic shelf label, the method including acquiring a captured image of an LED included in the electronic shelf label, identifying a light emission pattern of the LED based on the captured image, and providing information regarding an event related to the electronic shelf label corresponding to the identified light emission pattern of the LED.

In another aspect, the light emission pattern of the LED may be determined by a combination of an operating state of the LED, a duration of the operating state of the LED, and a color emitted from the LED.

In another aspect, information on a first event corresponding to a first light emission pattern may be provided in the providing information regarding an event if the first light emission pattern is identified in the identifying a light emission pattern of the LED, and information on a second event corresponding to a second light emission pattern and different from the first event may be provided in the providing information regarding an event if the second light emission pattern different from the first light emission pattern is identified in the identifying a light emission pattern of the LED.

In another aspect, at least one of an operating state of the LED, a duration of the operating state of the LED, or a color emitted from the LED included in the first light emission pattern may be different from at least one of an operating state of the LED, a duration of the operating state of the LED, or a color emitted from the LED included in the second light emission pattern.

In another aspect, the event related to the electronic shelf label may include a state in which a remaining energy level of a battery included in the electronic shelf label is equal to or less than a threshold value.

In another aspect, the event related to the electronic shelf label may include a state in which a remaining period until an expiration date of a product assigned to the electronic shelf label is equal to or less than a threshold period.

In another aspect, the event related to the electronic shelf label may include an event regarding a stock status of a product assigned to the electronic shelf label.

In another aspect, the event regarding the stock status may include any one of misplacement of the product, a stock shortage of the product, and the product being out of stock.

In another aspect, the providing information regarding an event may include displaying the information regarding the event, corresponding to the identified light emission pattern of the LED and obtained from a light emission pattern database, on a display module.

In another aspect, the method of providing event information related to an electronic shelf label may further include receiving an event occurrence alarm signal indicating occurrence of the event, and controlling an imaging device to capture an image of the LED operating in the light emission pattern upon receiving the event occurrence alarm signal.

In another aspect, the method of providing event information related to an electronic shelf label may further include receiving an event occurrence alarm signal indicating occurrence of the event, and controlling the electronic shelf label such that the LED included in the electronic shelf label operates in a predetermined light emission pattern corresponding to the event upon receiving the event occurrence alarm signal.

In another aspect, the electronic shelf label may be controlled such that the LED operates in a first emission pattern in the controlling the electronic shelf label if a first event occurrence alarm signal indicating occurrence of a first event is received in the receiving an event occurrence alarm signal, and the electronic shelf label may be controlled such that the LED operates in a second emission pattern different from the first emission pattern in the controlling the electronic shelf label if a second event occurrence alarm signal indicating occurrence of a second event is received in the receiving an event occurrence alarm signal.

One embodiment provides
a system for providing event information related to an electronic shelf label, the system including an electronic shelf label including an LED, an imaging device, and a computing device including a processor configured to perform a method of providing information on an event related to the electronic shelf label by identifying a light emission pattern of the LED based on a captured image of the electronic shelf label captured by the imaging device.

In another aspect, the LED included in the electronic shelf label may be configured to operate in a light emission pattern corresponding to the event based on detection of occurrence of the event.

### [Advantageous Effects]

According to various embodiments of the present disclosure, it is possible to provide a method and system for providing event information related to an electronic shelf label based on identification of a light emission pattern of an LED included in the electronic shelf label using a captured image of the electronic shelf label captured by an imaging device.

According to various embodiments of the present disclosure, it is possible to provide a method and system for providing event information related to an electronic shelf label, which can improve the efficiency of managing products and electronic shelf labels displayed in a store by obtaining information about various different events related to the electronic shelf labels, which is difficult for store staff to individually check, based on identification of a plurality of different light emission patterns of LEDs of the electronic shelf labels.

According to various embodiments of the present disclosure, it is possible to provide a method and system for providing product-related information using an LED of an electronic shelf label, which provides product-related information by controlling a light emission pattern of an LED included in an electronic shelf label based on data of captured images obtained by capturing an area where the electronic shelf label and a product are provided on a shelf and planogram data.

According to various embodiments of the present disclosure, it is possible to provide a method and system for providing product-related information using an LED of an electronic shelf labels, which identifies a light emission pattern of an LED of an electronic shelf label provided on a shelf and provides product-related information corresponding to the light emission pattern of the LED.

According to various embodiments of the present disclosure, it is possible to provide a method and system for providing product-related information using an LED of an electronic shelf label, which provides information related to a display state of a product based on a result of comparison between a captured image obtained by capturing an electronic shelf label provided on a shelf and a product and a reference image obtained from a planogram based on location information assigned to a pattern code displayed by the electronic shelf label.

### [Description of Drawings]

FIG. 1 illustrates an exemplary configuration of a system for providing event information related to an electronic shelf label according to an embodiment.
FIG. 2 illustrates an exemplary configuration of an electronic shelf label according to an embodiment.
FIG. 3 is a block diagram illustrating an exemplary configuration of a server according to an embodiment.
FIG. 4 is a block diagram illustrating an exemplary configuration of a computing device according to an embodiment.
FIG. 5 is a flowchart illustrating a method of providing event information related to an electronic shelf label according to an embodiment.
FIG. 6 illustrates various light emission patterns of an LED of an electronic shelf label and information regarding various events corresponding thereto according to an embodiment.
FIG. 7 illustrates the principle of LED operation according to occurrence of an event related to an electronic shelf label according to an embodiment.
FIG. 8 is a flowchart illustrating a method of providing event information related to an electronic shelf label according to another embodiment.
FIG. 9 illustrates the principle of controlling an imaging device according to occurrence of an event related to an electronic shelf label according to an embodiment.
FIG. 10 is a flowchart illustrating a method of providing event information related to an electronic shelf label according to another embodiment.
FIG. 11 illustrates the principle of controlling LED operation according to occurrence of an event related to an electronic shelf label according to an embodiment.
FIG. 12 illustrates an exemplary configuration of a system for providing product-related information using an LED of an electronic shelf label according to an embodiment.

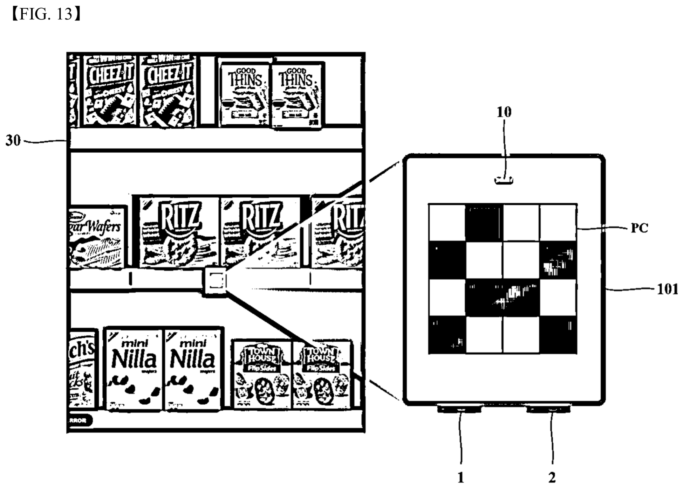

FIG. 13 illustrates an exemplary configuration of an electronic shelf label according to an embodiment.
FIG. 14 is a block diagram illustrating an exemplary configuration of a server according to an embodiment.
FIG. 15 is a block diagram illustrating an exemplary configuration of a computing device according to an embodiment.
FIG. 16 is a flowchart illustrating a method of providing product-related information using an LED of an electronic shelf label according to an embodiment.
FIG. 17 illustrates an example of a first captured image of an electronic shelf label and a product, captured by an imaging device according to an embodiment.
FIG. 18 illustrates an example of a planogram of an electronic shelf label and a product according to an embodiment.
FIG. 19 illustrates various light emission patterns of an LED of an electronic shelf label and information related to various products corresponding thereto, according to one embodiment.
FIG. 20 is a flowchart illustrating a method of providing product-related information using an LED of an electronic shelf label according to another embodiment.
FIG. 21 is a flowchart illustrating a step of comparing data of the first captured image of FIG. 9 with planogram data according to an embodiment.
FIG. 22 illustrates an exemplary first captured image obtained by the imaging device capturing an area in which electronic shelf labels and products are provided according to another embodiment.
FIG. 23 illustrates an exemplary planogram according to an embodiment.
FIG. 24 illustrates display of product misplacement alarm information on a computing device according to an embodiment.
FIG. 25 illustrates an exemplary first captured image obtained by the imaging device capturing an area in which electronic shelf labels and products are provided according to another embodiment.
FIG. 26 illustrates display of product out-of-stock alarm information on a computing device according to an embodiment.
FIG. 27 illustrates an exemplary first captured image obtained by the imaging device capturing an area in which electronic shelf labels and products are provided according to another embodiment.

### [Mode for Invention]

The present disclosure is capable of various modifications and embodiments. Therefore, specific embodiments are illustrated in the drawings and described in detail in the detailed description. The effects and features of the present disclosure, as well as the methods for achieving the same, will become clearer with reference to the embodiments described in detail below together with the drawings. However, the present disclosure is not limited to the embodiments disclosed below and can be implemented in various forms. In the following embodiments, terms such as "first," and "second" are not used in a limiting sense but are used for the purpose of distinguishing one component from another. Furthermore, the singular expression includes plural expressions unless the context clearly indicates otherwise. Furthermore, terms such as "include" and "have" indicate the presence of a feature or component described in the specification, and do not preemptively exclude the possibility of one or more other features or components being added. Furthermore, the sizes of components in the drawings may be exaggerated or reduced for convenience of explanation. For example, the size and thickness of each component shown in the drawings are arbitrarily shown for convenience of explanation, and thus the present disclosure is not necessarily limited to what is shown.

Hereinafter, embodiments of the present disclosure will be described in detail with reference to the attached drawings. In describing with reference to the drawings, identical or corresponding components are given the same drawing reference numerals, and redundant descriptions thereof will be omitted.

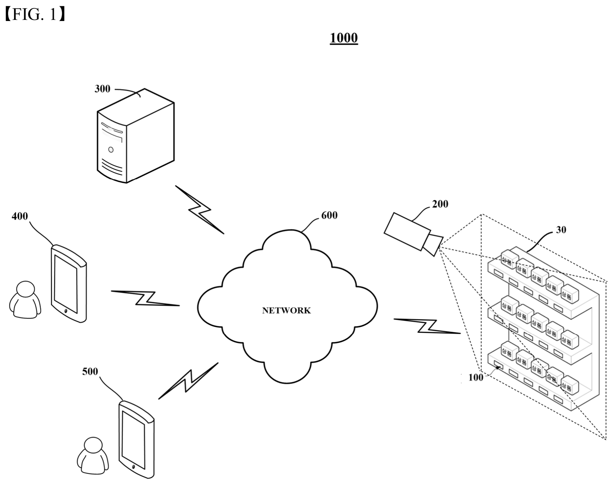

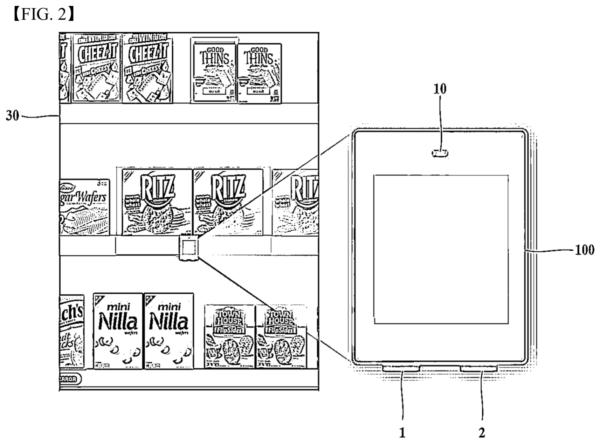

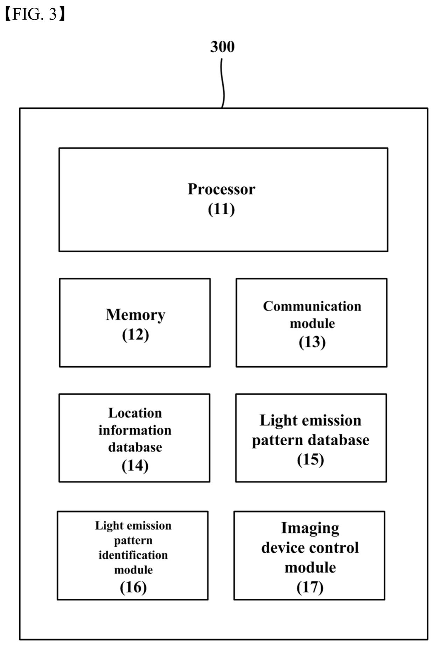

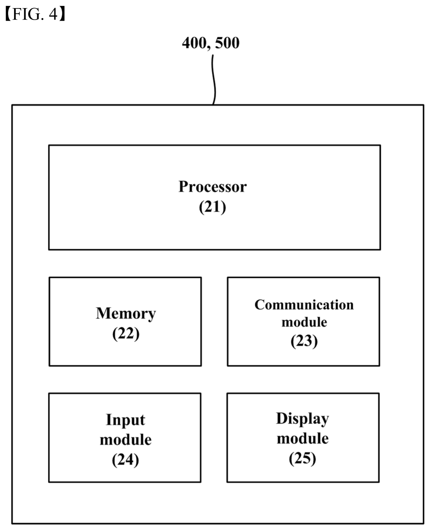

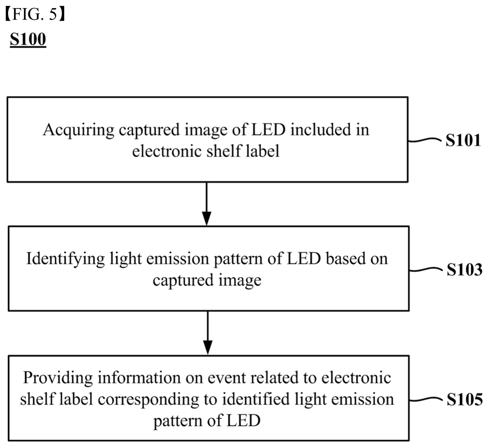

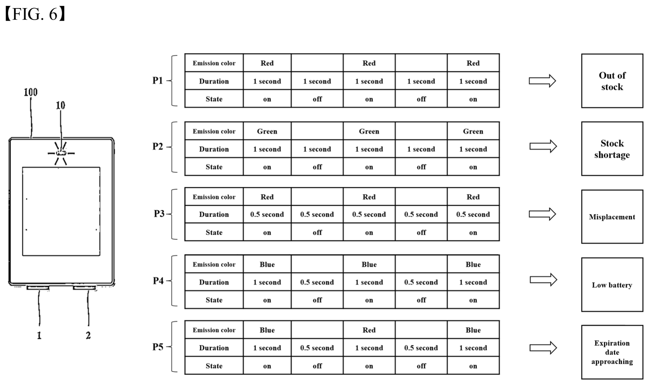

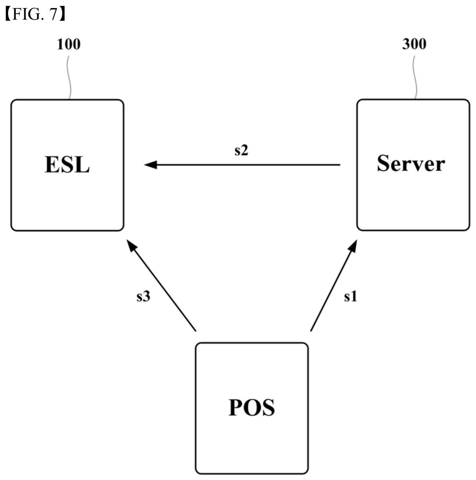

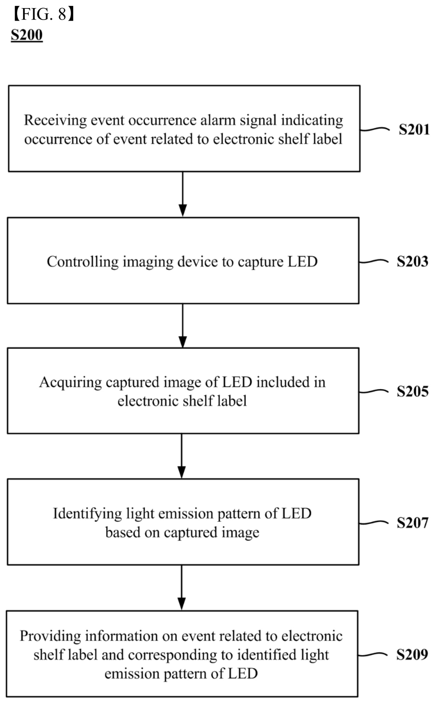

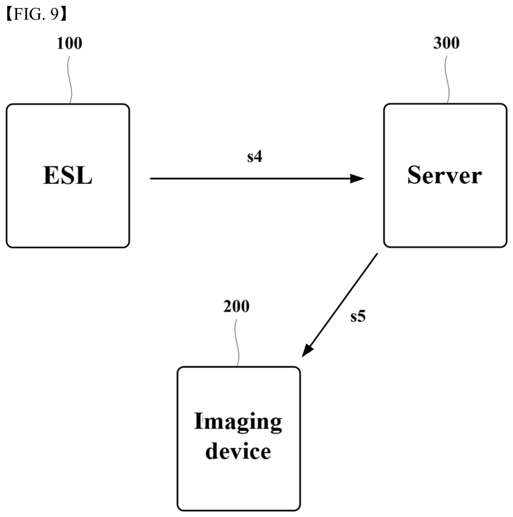

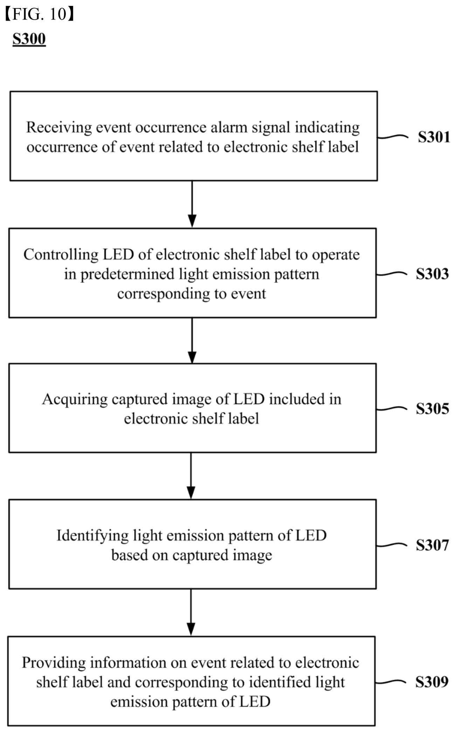

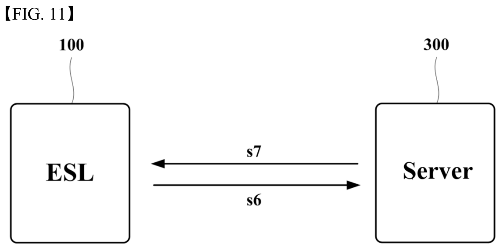

FIG. 1 illustrates an exemplary configuration of a system 1000 for providing event information related to an electronic shelf label according to an embodiment. FIG. 2 illustrates an exemplary configuration of an electronic shelf label 100 according to an embodiment. FIG. 3 is a block diagram illustrating an exemplary configuration of a server 300 according to an embodiment. FIG. 4 is a block diagram illustrating an exemplary configuration of a computing device 400, 500 according to an embodiment. FIG. 5 is a flowchart illustrating a method S 100 of providing event information related to an electronic shelf label according to an embodiment. FIG. 6 illustrates various light emission patterns P1, P2, P3, P4, and P5 of an LED 10 of an electronic shelf label 100 and information regarding various events corresponding thereto according to an embodiment. FIG. 7 illustrates the principle of operation of the LED 10 according to occurrence of an event related to an electronic shelf label according to an embodiment. FIG. 8 is a flowchart illustrating a method S200 of providing event information related to an electronic shelf label according to another embodiment. FIG. 9 illustrates the principle of controlling an imaging device 200 according to occurrence of an event related to an electronic shelf label according to an embodiment. FIG. 10 is a flowchart illustrating a method S300 of providing event information related to an electronic shelf label according to another embodiment. FIG. 11 illustrates the principle of controlling operation of the LED 10 according to occurrence of an event related to an electronic shelf label according to an embodiment.

Referring to FIG. 1, a system 1000 for providing event information related to an electronic shelf label according to an embodiment may include at least one electronic shelf label 100, an imaging device 200, a server 300, and computing devices 400 and 500. The computing devices 400 and 500 may be portable user terminals.

The system 1000 may provide an environment in which information about an event related to the electronic shelf label 100 is provided based on a light emission pattern of an LED included in the electronic shelf label 100.

The electronic shelf label 100, the imaging device 200, the server 300, and the computing devices 400 and 500 may be connected via a network 600. Here, the network 600 according to the embodiment may refer to a connection architecture that enables information exchange between nodes, such as the electronic shelf label 100, the imaging device 200, the server 300, and the computing devices 400 and 500.

For example, the network 600 may include a 3rd Generation Partnership Project (3GPP) network, a Long Term Evolution (LTE) network, a World Interoperability for Microwave Access (WIMAX) network, the Internet, a Local Area Network (LAN), a wireless LAN, a Wide Area Network (WAN), a Personal Area Network (PAN), a Bluetooth network, a satellite broadcasting network, an analog broadcasting network, a Digital Multimedia Broadcasting (EMB) network, and the like, but the present disclosure is not limited thereto.

The electronic shelf label 100 may be wirelessly connected to the server 300 via a separate gateway (not shown). However, the present disclosure is not limited thereto, and the electronic shelf label 100 may be connected to the computing devices 400 and 500 via wireless communication. For example, the electronic shelf label 100 may be paired with a computing device 400 or 500 based on Bluetooth.

Hereinafter, the electronic shelf label 100, the imaging device 200, the server 300, and the computing devices 400 and 500 included in the system 1000 will be described in detail with reference to the attached drawings.

### - At least one electronic shelf label 100

The electronic shelf label 100 may be an electronic device mounted on a shelf 30 and displaying information related to a product displayed on the shelf 30. For example, the electronic shelf label 100 may display product-related information, such as a Korean product name, an English product name, country of origin, product price, raw materials, and weight/calories.

The electronic shelf label 100 may include a display module that displays a template to which product-related information is applied on the front and a communication module capable of communicating with the server 300 and user terminals 400 and 500. Furthermore, the electronic shelf label 100 may be equipped with any components and programs capable of Bluetooth communication.

The display module included in the electronic shelf label 100 may include an electronic paper display (EPD), which maintains a product information display state even when power is cut off. The electronic paper display is suitable for the electronic shelf label 100 that requires reduced power consumption due to the bistability thereof, which allows the electronic shelf label to maintain the display state for a long period of time even when power is cut off. Known electronic paper displays include a twist ball type using hemispherical twist balls charged with electrostatic charge, an electrophoretic display using electrophoresis and microcapsules, and a cholesterol liquid crystal display using cholesterol liquid crystals.

However, the present disclosure is not limited thereto, and the display module included in the electronic shelf label 100 may include any one of a liquid crystal display (LCD), a thin film transistor-liquid crystal display (TFT LCD), an organic light-emitting diode (OLED), a flexible display, and a three-dimensional display (3D display).

Referring to FIG. 2, the electronic shelf label 100 may include a display module that displays product-related information provided in one area of the outer surface thereof. Furthermore, the electronic shelf label 100 may include one or more buttons 1 and 2. For example, the electronic shelf label 100 may include a first button 1 and a second button 2. The first button 1 and the second button 2 may be provided on a portion of the outer surface of the electronic shelf label 100.

A pairing signal may be transmitted from the electronic shelf label 100 to the user terminal 400 or 500 based on user input via the first button 1 and/or the second button 2. Accordingly, the electronic shelf label 100 may be paired with the user terminal 400 or 500 based on Bluetooth. For example, when a user presses the first button 1 and/or the second button 2, a pairing signal is transmitted from the electronic shelf label 100 to the user terminal 400 or 500, and thus the electronic shelf label 100 may be paired with the user terminal 400 or 500 based on the Bluetooth function.

### - Imaging device 200

The imaging device 200 may be installed around the shelf 30 and controlled to capture an image of an area on the shelf 30 where the electronic shelf label 100 and at least one product are provided. The imaging device 200 may be installed movably around the shelf 30 and controlled to periodically capture images of the electronic shelf label 100 and the product on the shelf 30.

In a state in which a plurality of shelves 30 is arranged, the imaging device 200 may be installed on a first shelf among the plurality of shelves 30, and the imaging device 200 may be configured to capture images of the electronic shelf label 100 and at least one product on a second shelf facing the first shelf.

For example, a plurality of different types of products may be displayed on a shelf 30, and a plurality of electronic shelf labels 100 may be provided on the shelf 30 to correspond to the positions at which the plurality of products is provided. In this case, information related to each of the different types of products may be assigned to each of the plurality of electronic shelf labels 100 provided at the positions corresponding to the plurality of products. The imaging device 200 may capture an image of the plurality of products and the plurality of electronic shelf labels 100 provided on the shelf 30 to obtain a captured image. Accordingly, the captured image may include the plurality of products and the plurality of electronic shelf labels 100 provided to correspond to the plurality of products.

### - Server 300

The server 300 may perform a series of processes to provide an environment necessary to perform a method of providing event information related to an electronic shelf label.

Specifically, in an embodiment, the server 300 may exchange necessary data with the electronic shelf label 100, the imaging device 200, and the computing devices 400 and 500 to enable the method of providing event information related to the electronic shelf label based on identification of a light emission pattern of the LED 10 of the electronic shelf label 100. Accordingly, the server 300 can provide an environment necessary to perform the method of providing event information related to an electronic shelf label.

For example, the server 300 may provide an environment in which an electronic shelf label-related event information provision application can operate in the computing devices 400 and 500 (e.g., portable user terminal type computing devices, desktop-type computing devices, etc.). The server 300 may include application programs, data, and/or instructions for the electronic shelf label-related event information provision application to operate, and may transmit data based thereon to the computing devices 400 and 500.

Furthermore, the server 300 may provide a license key to the computing devices 400 and 500. The server 300 may provide a license key that grants the computing devices 400 and 500 the authority to receive data regarding electronic shelf label-related event information. For example, store customers can receive an electronic shelf label-related event information provision service by using the computing devices 400 and 500 that have received a license key.

Referring to FIG. 3, the server 300 may be implemented as a predetermined computing device including at least one processor 11 for data processing, a memory 2 in which application programs, data and/or instructions are stored, at least one communication module 13 for data exchange with external devices, a location information database 14 in which location information of the electronic shelf label 100 is stored, an light emission pattern database 15 in which information related to light emission patterns of the LED 10 is stored, an light emission pattern identification module 16 for identifying light emission patterns of the LED 10 included in the electronic shelf label 100, and an imaging device control module 17 for controlling the operation of the imaging device 200.

The processor 11 may control the overall operation of components included in the server 300 to provide an environment in which the electronic shelf label-related event information provision application can operate in the computing devices 400 and 500.

The processor 11 may be a system-on-chip (SOC) including a central processing unit (CPU) and/or a graphics processing unit (GPU), and may execute an operating system (OS) and/or application programs stored in the memory 12.

In addition, the processor 11 may internally communicate with each component included in the server 300 via a system bus, and may include one or more predetermined bus structures, including a local bus.

In addition, the processor 11 may be implemented using at least one of application specific integrated circuits (ASICs), digital signal processors (DSPs), digital signal processing devices (DSPDs), programmable logic devices (PLDs), field programmable gate arrays (FPGAs), controllers, microcontrollers, microprocessors, and other electrical units for performing functions.

The memory 12 may store one or more of an operating system (OS), various application programs, data, and instructions for providing an environment necessary to perform the method of providing event information related to an electronic shelf label.

Additionally, the memory 12 may include a program area and a data area. Here, the program area according to the embodiment may be linked between the operating system (OS) that boots the server 300 and functional elements, and the data area may store data generated as the server 300 is used.

In an embodiment, the memory 12 may be various storage devices such as a ROM, a RAM, an EPROM, a flash drive, and a hard drive, and may also be web storage that performs a storage function on the Internet. Furthermore, the memory 12 may be a removable storage medium on the server.

The communication module 13 may include various types of communication devices that enable the server 300 to transmit/receive data to/from external devices. The server 300 may transmit data based on application programs, data, and/or instructions for the operation of the electronic shelf label-related event information provision application to the computing devices 400 and 500 via the communication module 13.

The location information database 14 may store location information of the electronic shelf label 100. For example, a plurality of electronic shelf labels 100 corresponding to a plurality of products may be provided on a shelf 30. Such electronic shelf labels 100 may be placed at specific locations on the shelf 30, and specific location information on the electronic shelf labels 100 with respect to the shelf 30 may be stored in the location information database 14.

For example, a first electronic shelf label among the electronic shelf labels 100 may be provided on the second row and the third column of the first shelf provided in zone A among a plurality of zones. In this case, location information on the first electronic shelf label, "second row and third column of the first shelf in zone A," may be stored in the location information database 14 as location information on the first electronic shelf label in association with a unique identification number of the first electronic shelf label.

The light emission pattern database 15 may store information on types of light emission patterns determined by combinations of operating states of the LED 10, durations of the operating states of the LED 10, and colors emitted from the LED 10. Furthermore, the light emission pattern database 15 may store event information corresponding to the types of light emission patterns.

Light emission pattern type information and event information may be matched and stored in the light emission pattern database 15. For example, in the light emission pattern database 15, a first light emission pattern and first event information corresponding to the first light emission pattern may be matched and stored, and a second light emission pattern and second event information corresponding to the second light emission pattern may be matched and stored. Here, the first light emission pattern and the second light emission pattern may be different from each other, and the first event and the second event may be different from each other.

The light emission pattern identification module 16 may identify a light emission pattern of the LED 10 included in the electronic shelf label 100. The LED 10 may be configured to operate in a predetermined light emission pattern corresponding to an event related to the electronic shelf label 100 upon detection of occurrence of the event.

However, the present disclosure is not limited thereto, and the LED 10 may be controlled to emit light in various light emission patterns based on signals from the server 300 or the computing devices 400 and 500.

The light emission pattern identification module 16 may identify various light emission patterns of the LED 10 from a captured image captured by the imaging device 200 using a pattern extraction algorithm.

For example, the imaging device 200 may transmit data of a captured image of the electronic shelf label 100 to the server 300. The light emission pattern identification module 16 may identify the light emission pattern of the LED 10 of the electronic shelf label 100 included in the captured image based on the data of the captured image transmitted from the imaging device 200.

The imaging device control module 17 may control the imaging device 200 to capture an image of an area around the shelf 30 where the electronic shelf label 100 and a product are provided on the shelf 30.

For example, the imaging device control module 17 may control the imaging device 200 installed to be movable around a shelf 30 to periodically capture images of the electronic shelf label 100 and the product on the shelf 30.

Furthermore, for example, the imaging device control module 17 may control the imaging device 200 installed around a shelf 30 to continuously capture images of the electronic shelf label 100 and the product on the shelf 30.

Furthermore, for example, when the imaging device control module 17 receives an event occurrence alarm signal indicating occurrence of an event related to the electronic shelf label 100 from the outside, the imaging device control module 17 may control the imaging device 200 to capture the LED 10 that operates in a predetermined light emission pattern corresponding to the event.

Although the server 300 according to an embodiment performs the functional operations described above in the above description, at least some functional operations performed by the server 300 may be performed by an external device (e.g., the computing devices 400 and 500), or at least some functional operations performed by the external device may be further performed by the server 300 according to various embodiments.

### - Computing devices 400 and 500

The computing devices 400 and 500 may be devices having an electronic shelf label-related event information provision application installed therein. The computing devices 400 and 500 may include portable user terminals. The computing devices 400 and 500 may be divided into a first computing device 400 and a second computing device 500 depending on the user.

For example, the user of the first computing device 400 may be a store employee, and the user of the second computing device 500 may be a store customer. The first computing device 400 and the second computing device 500 may have substantially the same structure.

The computing devices 400 and 500 may be implemented as, for example, computers or portable terminals that can connect to the server 300 via a network. Here, computers may include, for example, a notebook, a desktop, and a laptop equipped with a WEB browser, a VR HMD (for example, HTC VIVE, Oculus Rift, GearVR, DayDream, PSVR, etc.), etc. Here, the VR HMD includes all of VR HMD for PC (for example, HTC VIVE, Oculus Rift, FOVE, Deepon, etc.), models for mobile (for example, GearVR, DayDream, Storm Magic, Google Cardboard, etc.), models for console (PSVR), and stand-alone models implemented independently (for example, Deepon, PICO, etc.). Portable terminals are, for example, wireless communication devices that ensures portability and mobility, and may include not only smartphones, tablets, and wearable devices, but also various devices equipped with communication modules such as Bluetooth (BLE, Bluetooth Low Energy), NFC, RFID, ultrasonic, infrared, Wi-Fi, and LiFi.

Referring to FIG. 4, the computing devices 400 and 500 may include at least one processor 21, a memory 22, a communication module 23, an input module 24, and a display module 25. Various components included in the computing devices 400 and 500 may be designed to be included within the housings of the computing devices 400 and 500.

In an embodiment, the processor 21 may control the overall operation of the components included in the computing devices 400 and 500 through the electronic shelf label-related event information provision application stored in the memory 22 to provide an environment for providing electronic shelf label-related event information based on identification of a light emission pattern of the LED 10 of the electronic shelf label 100.

For example, the processor 21 can control the operations of the communication module 23 and the display module 25 such that data of electronic shelf label-related event information received through the communication module 23 can be displayed on the display module 25.

The processor 21 may include a central processing unit (CPU) and/or a graphics processing unit (GPU). In addition, the processor 21 may include at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

The memory 22 can store commands and data that can be used to create an environment for providing electronic shelf label-related event information. The electronic shelf label-related event information provision application may be stored in the memory 22. The electronic shelf label-related event information provision application can provide various user interfaces for providing an environment for providing electronic shelf label-related event information.

The memory 22 may include one or more non-transitory computer-readable storage media and transitory computer-readable storage media. For example, the memory 22 may include various storage devices such as a ROM, an EPROM, a flash drive, and a hard drive. Furthermore, the memory 22 may include web storage that performs data storage functions over the Internet.

The communication module 23 may include various communication devices that enable data transmission/reception to/from external devices. For example, the communication module 23 may transmit/receive data to/from the electronic shelf label 100 and/or the server 300 via a wireless network.

The communication module 23 may wirelessly transmit/receive data to/from at least one of a base station, an external terminal, or an arbitrary server over a mobile communication network constructed using a communication device capable of performing technical standards or communication methods for mobile communication (e.g., Long Term Evolution (LTE), Long Term Evolution-Advanced (LTE-A), 5G NR (New Radio), and Wi-Fi) or short-range communication.

Furthermore, the communication module 23 may be configured to transmit/receive data to/from an external electronic device via Bluetooth. For example, the communication module 23 may receive a pairing signal from the electronic shelf label 100 and pair with the electronic shelf label 100 via Bluetooth.

The input module 24 may be configured to receive various types of user input from users using the computing devices 400 and 500. For example, the input module 24 may include a touch screen that receives touch input from a user. If the input module 24 is implemented as a touch screen, the input module 24 may be formed integrally with the display module 25. However, the present disclosure is not limited thereto, and the input module 24 may further include a keyboard capable of receiving user input in the form of characters.

The display module 25 may display the electronic shelf label-related event information provision application stored in the memory 22. For example, the display module 25 may include a display device that displays various types of user interface (UI) images for providing an environment for providing electronic shelf label-related event information.

The display module 25 may include any one of a liquid crystal display (LCD), a thin film transistor-liquid crystal display (TFT LCD), an organic light-emitting diode (OLED), a flexible display, and a 3D display.

### - Methods of providing event information related to electronic shelf label S100, S200, and S300

Hereinafter, methods of providing event information related to an electronic shelf label through the electronic shelf label-related event information provision application executed by at least one processor 21 of the computing devices 400 and 500 according to various embodiments will be described in detail with reference to FIG. 5 to FIG. 11.

In various embodiments, at least one processor 21 of the computing devices 400 and 500 may execute the electronic shelf label-related event information provision application stored in the memory 22 or operate the same in the background.

Although at least one processor 21 of the computing devices 400 and 500 operates to execute instructions of the electronic shelf label-related event information provision application to perform a method of providing an environment necessary to perform the above-described methods of providing event information related to an electronic shelf label, the electronic shelf label-related event information provision application performs the methods instead of the at least one processor 21 of the computing devices 400 and 500 in the following description for convenience of explanation.

FIG. 5 is a flowchart illustrating a method S100 of providing event information related to an electronic shelf label according to an embodiment.

Referring to FIG. 5, the method S100 of providing event information related to an electronic shelf label may include step S101 of acquiring a captured image of the LED 10 included in the electronic shelf label 100, step S103 of identifying a light emission pattern of the LED 10 based on the captured image, and step S105 of providing information on an event related to the electronic shelf label 100 corresponding to the identified light emission pattern of the LED 10.

In step S101 of acquiring a captured image, the processor 11 of the server 300 may control the imaging device 200 to capture an area on a shelf 30 where the electronic shelf label 100 and at least one product are provided, thereby acquiring the captured image.

For example, the captured image may include one of a plurality of electronic shelf labels arranged on the shelf 30 and the product assigned thereto. However, the present disclosure is not limited thereto, and the captured image may include a plurality of electronic shelf labels arranged on the shelf 30 and a plurality of products arranged to correspond to the plurality of electronic shelf labels.

The imaging device 200 may transmit the acquired captured image to the server 300 and/or the computing devices 400 and 500 via the network 600.

In step S103 of identifying the light emission pattern of the LED 10, the light emission pattern identification module 16 of the server 300 may identify the light emission pattern of the LED 10 of the electronic shelf label 100 included in the captured image.

The light emission pattern identification module 16 may identify the light emission pattern of the LED 10 of the electronic shelf label 100 from the captured image using a pattern extraction algorithm. Here, the light emission pattern of the LED 10 may be determined by a combination of the operating state (on/off) of the LED 10, the duration of the operating state of the LED 10, and the color emitted from the LED 10.

Referring to FIG. 6, various types of light emission patterns P1, P2, P3, P4, and P5 of the LED 10 of the electronic shelf label 100 may be determined in various manners according to combinations of operating states (on/off) of the LED 10, durations of the operating states of the LED 10, and colors emitted from the LED 10.

These various types of light emission patterns P1, P2, P3, P4, and P5 may) may correspond to different electronic shelf label-related events. For example, at least one of the operating state of the LED 10, the duration of the operating state of the LED 10, or the light emission color of the LED 10 included in any one of the light emission patterns P1, P2, P3, P4, and P5 may be different from at least one of the operating state of the LED 10, the duration of the operating state of the LED 10, and the light emission color of the LED 10 included in any other one of the light emission patterns P1, P2, P3, P4, and P5.

For example, the LED 10 of the electronic shelf label 100 may operate in a first light emission pattern P1, a second light emission pattern P2, a third light emission pattern P3, a fourth light emission pattern P4, and a fifth light emission pattern P5. However, the present disclosure is not limited thereto, and the LED 10 may operate in countless light emission patterns other than the five listed in FIG. 6.

The first light emission pattern P1 may be a light emission pattern in which the LED 10 is turned on and off alternately at 1-second intervals for 5 seconds, starting from an on state, and the LED 10 emits red light when turned on.

For example, the first light emission pattern P1 may correspond to a product being out of stock assigned to the electronic shelf label 100. Specifically, the LED 10 of the electronic shelf label 100 may be configured to operate in the first light emission pattern P1 when the product being out of stock assigned to the electronic shelf label 100 is detected.

The second light emission pattern P2 may be a light emission pattern in which the LED 10 is turned on and off alternately at 1-second intervals for 5 seconds, starting from the on state, and the LED 10 emits green light when turned on.

For example, the second light emission pattern P2 may correspond to a shortage of stock of a product assigned to the electronic shelf label 100. Specifically, the LED 10 of the electronic shelf label 100 may be configured to operate in the second light emission pattern P2 when a shortage of stock of the product assigned to the electronic shelf label 100 is detected.

The third light emission pattern P3 may be a light emission pattern in which the LED 10 is turned on and off alternately at 0.5 second intervals for 2.5 seconds starting from the on state, and the LED 10 emits red light when turned on.

For example, the third light emission pattern P3 may correspond to misplacement of a product assigned to the electronic shelf label 100. Specifically, the LED 10 of the electronic shelf label 100 may be configured to operate in the third light emission pattern P3 when misplacement of the product assigned to the electronic shelf label 100 is detected.

The fourth light emission pattern P4 may be a light emission pattern in which the LED 10 is turned on and off alternately 4 seconds starting from the on state, and the LED 10 emits blue light when turned on. In the fourth light emission pattern P4, the duration of the on state of the LED 10 may be 1 second, and the duration of the off state may be 0.5 seconds.

For example, the fourth light emission pattern P4 may correspond to a low battery (not shown) included in the electronic shelf label 100. Specifically, the LED 10 of the electronic shelf label 100 may be configured to operate in the fourth light emission pattern P4 when the remaining energy of the battery included in the electronic shelf label 100 is detected to be below a threshold value. Here, the threshold value of the remaining energy of the battery may be preset and stored in the memory 12.

The fifth light emission pattern P5 may be a light emission pattern in which the LED 10 is turned on and off alternately for 4 seconds, starting from the on state. In the fifth light emission pattern P5, the duration of the on state of the LED 10 may be 1 second, and the duration of the off state may be 0.5 seconds. Additionally, in the fifth light emission pattern P5, the emission color in the first on state may be blue, the emission color in the second on state may be red, and the emission color in the third on state may be blue.

For example, the fifth light emission pattern P5 may correspond to an approaching expiration date of a product assigned to the electronic shelf label 100. Specifically, the LED 10 of the electronic shelf label 100 may be configured to operate in the fifth light emission pattern P5 when a state in which the remaining period until the expiration date of the product assigned to the electronic shelf label 100 is less than or equal to a threshold period is detected. Here, the threshold period related to the expiration date of the product may be preset and stored in the memory 12.

As described above, the various types of light emission patterns P1, P2, P3, P4, and P5 of the LED 10 may correspond to different electronic shelf label-related events. For example, the various types of light emission patterns P1, P2, P3, P4, and P5 of the LED 10 may correspond to events related to the remaining energy of the battery included in the electronic shelf label 100, events related to the expiration date of the product assigned to the electronic shelf label 100, and events related to the inventory state of the product assigned to the electronic shelf label 100.

Events related to the electronic shelf label 100 may be detected using various methods. A method of detecting events related to the electronic shelf label 100 described below is exemplary and is not limited thereto.

For example, referring to FIG. 7, when payment for a product assigned to the electronic shelf label 100 is made, a product payment completion alarm signal s 1 may be transmitted from a POS machine to the server 300. An event for the product assigned to the electronic shelf label 100 may be determined based on the number of times the product payment completion alarm signal s1 is transmitted.

For example, if the number of times the product payment completion alarm signal s1 is transmitted is equal to the number of products assigned to the electronic shelf label 100, the processor 11 of the server 300 may determine the occurrence of a product out-of-stock event. Accordingly, the server 300 may transmit an LED control signal s2 to the electronic shelf label 100, and in this case, the LED control signal s2 may be a signal for controlling the LED 10 to operate in the first light emission pattern P1.

In addition, for example, if the ratio of the number of times the product payment completion alarm signal s1 is transmitted to the number of products allocated to the electronic shelf label 100 falls below a predetermined threshold ratio, the processor 11 of the server 300 may determine the occurrence of a product shortage event. Accordingly, the server 300 may transmit an LED control signal s2 to the electronic shelf label 100, and in this case, the LED control signal s2 may be a signal for controlling the LED 10 to operate in the second light emission pattern P2.

However, the present disclosure is not limited thereto, and the LED control signal s3 may be transmitted directly from the POS to the electronic shelf label 100 without passing through the server 300.

Furthermore, events related to the remaining battery level of the electronic shelf label 100 or the expiration date of a product assigned to the electronic shelf label 100 may be detected by a processor included in the electronic shelf label 100. Accordingly, when a low battery level or an imminent expiration date of a product is detected, the LED 10 of the electronic shelf label 100 may be programmed to operate in a light emission pattern corresponding to the detected event.

In step S105 of providing information on an event related to the electronic shelf label 100, the processor 11 of the server 300 may extract an event corresponding to the light emission pattern identified by the light emission pattern identification module 16 from the light emission pattern database 15. Information on the extracted event may be transmitted to an external electronic device via the communication module 13.

For example, if the first light emission pattern P1 is identified in step S103 of identifying the light emission pattern of the LED 10, information on a first event corresponding to the first light emission pattern P1 may be provided in step S105 of providing information on an event. In addition, if the second light emission pattern P2 different from the first light emission pattern P1 is identified in step S103 of identifying the light emission pattern of the LED 10, information on a second event corresponding to the second light emission pattern P2 and different from the first event may be provided in step S105 of providing information on an event.

In this way, the information on the event provided in step S105 may vary depending on the type of the light emission pattern identified in step S103.

Meanwhile, in step S105 of providing information on an event, the information on the event corresponding to the identified light emission pattern of the LED 10 may be displayed on a display module. Specifically, the information on the event extracted by the processor 11 may be transmitted to the electronic shelf label 100 and/or the computing device 400 or 500, and the information on the event may be displayed on the display modules of the electronic shelf label 100 and/or the computing device 400 or 500.

FIG. 8 is a flowchart illustrating a method S200 of providing event information related to an electronic shelf label according to another embodiment.

Steps S205, S207, and S209 included in the method S200 of FIG. 8 may be substantially the same as steps S101, S103, and S105 included in the method S100 of FIG. 5. Accordingly, in describing FIG. 8, redundant description with respect to FIG. 5 to FIG. 7 will be omitted.

Referring to FIG. 8, the method S200 of providing event information related to an electronic shelf label may include step S201 of receiving an event occurrence alarm signal indicating the occurrence of an event related to the electronic shelf label 100, step S203 of controlling the imaging device 200 to capture an LED 10 of the electronic shelf label 100, step S205 of acquiring a captured image of the LED 10 included in the electronic shelf label 100, step S207 of identifying a light emission pattern of the LED 10 based on the captured image, and step S209 of providing information on an event related to the electronic shelf label 100 and corresponding to the identified light emission pattern of the LED 10.

In step S201 of receiving an event occurrence alarm signal, the server 300 may receive the event occurrence alarm signal from the outside through the communication module 13.

For example, referring to FIG. 9, the electronic shelf label 100 may detect an event related to the remaining level of battery included in the electronic shelf label 100 or the expiration date of a product assigned to the electronic shelf label 100, and accordingly, the electronic shelf label 100 may transmit an event occurrence alarm signal s4 indicating the occurrence of an event related to the remaining battery level or the expiration date to the server 300.

However, the present disclosure is not limited thereto, and the server 300 may receive an event occurrence alarm signal indicating the occurrence of an event such as a product being out of stock or insufficient in stock from a point-of-sale (POS) machine. In addition, the processor 11 of the server 300 may receive an event occurrence alarm signal indicating the occurrence of an event related to misplacement of a product assigned to the electronic shelf label 100 by a product inventory state monitoring module (not shown) included in the server 300.

In step S203 of controlling the imaging device 200 to capture the LED 10, the imaging device control module 17 of the server 300 may control the imaging device 200 to capture the LED 10 operating in a predetermined light emission pattern upon receiving the event occurrence alarm signal s4. By controlling the imaging device 200 to selectively capture the LED 10 operating in a predetermined light emission pattern upon occurrence of an event, the power required for the imaging device 200 to operate can be efficiently managed.

FIG. 10 is a flowchart illustrating a method S300 of providing event information related to an electronic shelf label according to another embodiment.

Steps S305, S307, and S309 included in the method S300 of FIG. 10 may be substantially the same as steps S101, S103, and S105 included in the method S100 of FIG. 5. In addition, step S301 may be substantially the same as step S101 of FIG. 8. Accordingly, in describing FIG. 10, redundant description with respect to FIG. 5 to FIG. 9 will be omitted.

Referring to FIG. 10, the method S300 of providing event information related to an electronic shelf label may include step S301 of receiving an event occurrence alarm signal indicating the occurrence of an event related to the electronic shelf label 100, step S303 of controlling the LED 10 of the electronic shelf label 100 to operate in a predetermined light emission pattern corresponding to the event, step S305 of acquiring a captured image of the LED 10 included in the electronic shelf label 100, step S307 of identifying an light emission pattern of the LED 10 based on the captured image, and step S309 of providing information on the event related to the electronic shelf label 100 and corresponding to the identified light emission pattern of the LED 10.

In step S303 of controlling the LED 10 to operate in a predetermined light emission pattern corresponding to the event, the LED control module (not shown) of the server 300 may control the LED 10 to operate in the predetermined light emission pattern corresponding to the event that has occurred upon receiving the event occurrence alarm signal from the outside.

For example, referring to FIG. 11, the electronic shelf label 100 may transmit an event occurrence alarm signal s6 to the server 300 to notify the server 300 of the occurrence of an event related to the remaining battery level or an expiration date. Upon receiving the event occurrence alarm signal s6 from the electronic shelf label 100, the server 300 may transmit an LED control signal s7 to the electronic shelf label 100 to cause the LED 10 to operate in a predetermined light emission pattern corresponding to the event that has occurred.

For example, if the server 300 receives a first event occurrence alarm signal indicating the occurrence of a first event in step S301, the server 300 may control the electronic shelf label 100 such that the LED 10 operates in a first light emission pattern in step S303.

Furthermore, if the server 300 receives a second event occurrence alarm signal indicating the occurrence of a second event different from the first event in step S301, the server 300 may control the electronic shelf label 100 such that the LED 10 operates in a second light emission pattern different from the first light emission pattern in step S303.

In this way, the server 300 can control the LED 10 to operate in various different light emission patterns depending on event type.

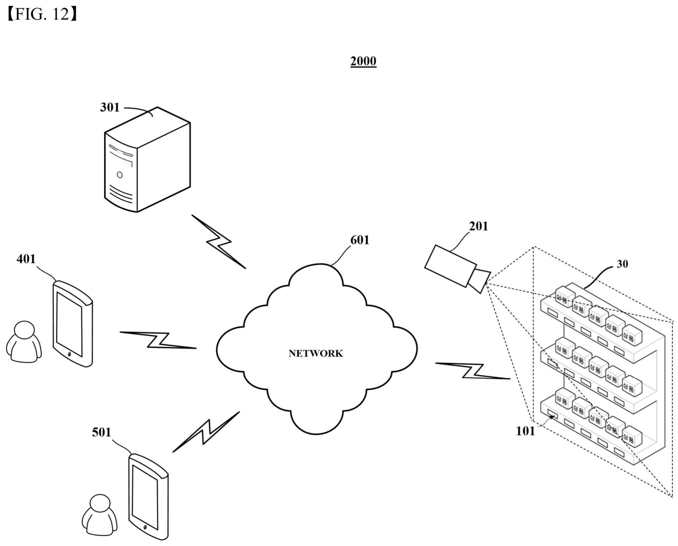

Referring to FIG. 12, a system 2000 for providing product-related information using an LED of an electronic shelf label 101 according to an embodiment may be provided.

### - System 2000

Referring to FIG. 1, the system 2000 for providing product-related information using an LED of an electronic shelf label 101 according to an embodiment may include an electronic shelf label 101, an imaging device 201, a server 301, and computing devices 401 and 501. The computing devices 401 and 501 may be portable user terminals.

The system 2000 may provide an environment in which information related to products assigned to the electronic shelf label 100 is provided to a user based on controlling the electronic shelf label 101 such that the LED included in the electronic shelf label 101 operates in a predetermined light emission pattern based on data of a first captured image obtained by capturing an area in which the electronic shelf label 101 and products arranged to correspond to the electronic shelf label 101 are provided.

The electronic shelf label 101, the imaging device 201, the server 301, and the computing devices 401 and 501 may be connected via a network 600. Here, the network 601 according to the embodiment may refer to a connection architecture that enables information exchange between nodes, such as the electronic shelf label 101, the imaging device 201, the server 301, and the computing devices 401 and 501.

Since the network 601 is substantially the same as the network 600 described with reference to FIG. 1, description of the network 601 is omitted here.

The electronic shelf label 101 may be wirelessly connected to the server 301 via a separate gateway (not shown). However, the present disclosure is not limited thereto, and the electronic shelf label 101 may be connected to the computing devices 401 and 501 via wireless communication. For example, the electronic shelf label 101 may be paired with the computing devices 401 and 501 based on the Bluetooth function.

Hereinafter, the electronic shelf label 101, the imaging device 201, the server 301, and the computing devices 401 and 501 included in the system 2000 will be described in detail with reference to the attached drawings.

### - Electronic shelf label 101

The electronic shelf label 101 may be an electronic device mounted on a shelf 30 and displaying information related to products displayed on the shelf 30. For example, the electronic shelf label 101 may display product-related information, such as a Korean product name, an English product name, country of origin, product price, raw materials, and weight/calories.

The configuration of the electronic shelf label 101 is substantially the same as that of the electronic shelf label 100 of FIG. 1, and thus only the features of the electronic shelf label 101 that differ from the electronic shelf label 100 of FIG. 1 will be described herein.

The electronic shelf label 101 may be controlled to display a pattern code PC through a display module. Here, the pattern code PC may be a 2D code. For example, the pattern code PC may be a 4×4 2D code, and each of a plurality of pixels included in the pattern code PC may be displayed in black or white. Accordingly, the pattern code PC may be displayed in 65,536 (=2¹⁶) different forms.

### - Imaging device 201

The imaging device 201 may be installed around the shelf 30 and controlled to capture an image of an area on the shelf 30 where the electronic shelf label 101 and products are provided. The imaging device 201 may be installed movably around the shelf 30 and controlled to periodically capture images of the electronic shelf label 101 and products on the shelf 30.

The imaging device 201 is substantially the same as the imaging device 200 of FIG. 1, and thus description of the imaging device 201 is omitted herein.

### - Server 301

The server 301 may perform a series of processes to provide an environment necessary to perform the method of providing product-related information using the LED 10 of the electronic shelf label 101.

Specifically, in an embodiment, the server 301 may exchange necessary data with the electronic shelf label 101, the imaging device 201, and the computing devices 401 and 501 to perform the method of providing product-related information using the LED 10 of the electronic shelf label 101. Accordingly, the server 301 can provide an environment necessary to perform the method of providing product-related information using the LED 10 of the electronic shelf label 101.

For example, the server 301 may provide an environment in which a product-related information provision application using the LED 10 of the electronic shelf label 101 can operate in the computing devices 401 and 501 (e.g., portable user terminal type computing devices, desktop-type computing devices, etc.). The server 301 may include application programs, data, and/or instructions for the product-related information provision application using the LED 10 of the electronic shelf label 101 to operate, and may transmit data based thereon to the computing devices 401 and 501.

Furthermore, the server 301 may provide a license key to the computing devices 401 and 501. The server 301 may provide a license key that grants the computing devices 401 and 501 the authority to receive data regarding products assigned to the electronic shelf label 101. For example, store customers can receive a service for providing information related to products assigned to the electronic shelf label 101 by using the computing devices 401 and 501 that have received a license key.

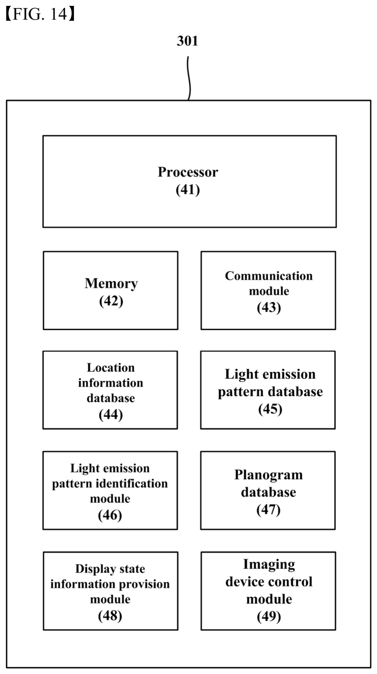

Referring to FIG. 14, the server 301 may be implemented as a predetermined computing device including at least one processor 41 for data processing, a memory 42 in which application programs, data and/or instructions are stored, at least one communication module 43 for data exchange with external devices, a location information database 44 in which location information of the electronic shelf label 101 is stored, an light emission pattern database 45 in which information related to light emission patterns of the LED 10 is stored, an light emission pattern identification module 46 for identifying light emission patterns of the LED 10 included in the electronic shelf label 101, a planogram database 47 in which planograms showing placement of products and the electronic shelf label 100 on a shelf 30 are stored, a display state information provision module 48 for providing product display state information to computing devices 401 and 501, and an imaging device control module 49 for controlling the operation of the imaging device 201.

The processor 41 may control the overall operation of components included in the server 301 to provide an environment in which an electronic shelf label-related event information provision application can operate in the computing devices 401 and 501.

The configuration of the processor 41 is substantially the same as that of the processor 11 of FIG. 3, and therefore, description thereof is omitted herein.

The memory 42 may store one or more of an operating system (OS), various application programs, data, and instructions necessary to provide an environment necessary to perform a method of providing information related to products assigned to electronic shelf labels.

The configuration of the memory 42 is substantially the same as that of the memory 12 of FIG. 3, and therefore, description thereof is omitted herein.

The communication module 43 may include various types of communication devices that enable the server 301 to transmit/receive data to/from external devices. The server 301 may transmit data based on an application program, data, and/or instructions for the operation of an application for providing information related to products assigned to electronic shelf labels to the computing devices 401 and 501 via the communication module 43.

The location information database 44 may store location information of the electronic shelf labels 101. For example, a plurality of electronic shelf labels 101 may be provided on a shelf 30 to correspond to a plurality of products. These plurality of electronic shelf labels 101 may be placed at specific locations on the shelf 30, and specific location information of the plurality of electronic shelf labels 101 with respect to the shelf 30 may be stored in the location information database 44.

The location information database 44 is substantially the same as the location information database 14 of FIG. 3, and therefore, more detailed description of the location information database 44 is omitted herein.

The light emission pattern database 45 may store information on the types of light emission patterns determined by combinations of operating states of the LED 10, the durations of the operating states of the LED 10, and colors emitted from the LED 10. Furthermore, the light emission pattern database 45 may store product-related information corresponding to the types of light emission patterns.

The light emission pattern database 45 is substantially the same as the light emission pattern database 15 of FIG. 3, and therefore, more detailed description of the light emission pattern database 45 is omitted herein.

The light emission pattern identification module 46 may identify a light emission pattern of the LED 10 included in the electronic shelf label 101. The LED 10 may be controlled to operate in a predetermined light emission pattern based on a signal from the server 301 or a computing device 401 or 501.

For example, the LED 10 may be controlled to operate in a predetermined light emission pattern based on the result of comparing planogram data with data of the first captured image obtained by the imaging device 201 capturing an area in which the electronic shelf label 101 and products corresponding to the electronic shelf label 101 are provided.

The light emission pattern identification module 46 may identify various light emission patterns of the LED 10 from the second captured image of the LED 10 operating in a predetermined light emission pattern, obtained by the imaging device 201, for example, using a pattern extraction algorithm.

For example, the imaging device 201 may transmit data of the second captured image of the electronic shelf label 101 including the LED 10 operating in a predetermined pattern to the server 301. The light emission pattern identification module 46 may identify the light emission pattern of the LED 10 of the electronic shelf label 101 included in the second captured image based on the data of the second captured image transmitted from the imaging device 201.

The planogram database 47 may store planograms showing placement of products and electronic shelf labels 101 on the shelf 30. A planogram may be an image showing products and electronic shelf labels 101 displayed on the shelf 30.

For example, a plurality of products and a plurality of electronic shelf labels 101 may be provided on the shelf 30. In this case, a plurality of electronic shelf labels 101 and a plurality of products assigned to the plurality of electronic shelf labels 101 may be displayed at specific locations on the shelf 30. A planogram can show display of the products and the electronic shelf labels 101 corresponding to each other on the shelf 30.

The planogram database 47 is included in the server 301, but the present disclosure is not limited thereto, and the planogram database 47 may be implemented as a server independent of the server 301.

The display state information provision module 48 may provide information on a display state of products, obtained based on planogram data and data of the first captured image acquired by the imaging device 201 capturing the electronic shelf labels 101 and products, to the computing device 401 or 501.

For example, if products assigned to the electronic shelf label 101 provided at a specific location on the shelf 30 are determined to be out of stock as a result of comparing the data of the first captured image with the planogram data, the display state information provision module 48 may provide alarm information indicating "product out of stock" to the computing device 401 or 501. In addition, if products of a different type from the products assigned to the electronic shelf label 101 are provided at the location corresponding to the electronic shelf label 101, the display state information provision module 48 may provide alarm information indicating "product misplacement" to the computing device 401 or 501. Furthermore, if the number of products assigned to the electronic shelf label 101 is equal to or less than a threshold value, the display state information provision module 48 may provide alarm information indicating "insufficient stock" to the computing device 401 or 501.

The imaging device control module 49 may control the imaging device 200 provided around the shelf 30 to capture the area in which the electronic shelf label 100 and products are provided on the shelf 30.

For example, the imaging device control module 49 may control the imaging device 201 installed movably around the shelf 30 to periodically capture the electronic shelf label 101 and the products on the shelf 30.

Furthermore, for example, the imaging device control module 49 may control the imaging device 201 installed around the shelf 30 to continuously capture the electronic shelf label 101 and the products on the shelf 30.

Moreover, the imaging device control module 49 may control the imaging device 201 to capture the LED 10 that operates in a predetermined light emission pattern according to the result of comparing, by the processor 41, the data of the first captured image obtained by capturing the area in which the electronic shelf label 101 and the products corresponding to the electronic shelf label 101 are provided with the planogram data.

Although the server 301 according to an embodiment performs the functional operations described above in the above description, at least some of the functional operations performed by the server 301 may be performed by an external device (e.g., the computing device 401 or 501), or at least some functional operations performed by the external device may be further performed by the server 301 in various embodiments.

### - Computing devices 401 and 501

The computing devices 401 and 501 may be devices in which a product-related information provision application using the LED 10 of the electronic shelf label 101 is installed. The computing devices 401 and 501 may include portable user terminals. The computing devices 401 and 501 may be divided into a first computing device 401 and a second computing device 501 depending on the user.

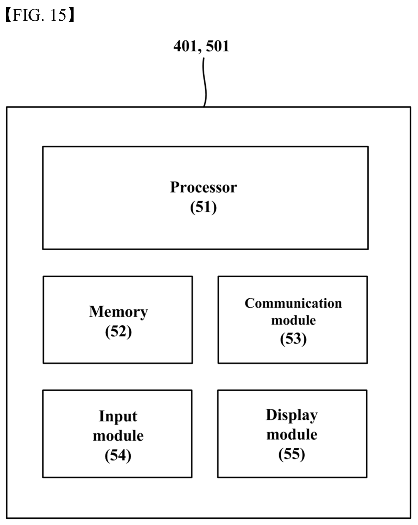

Referring to FIG. 15, the computing devices 401 and 501 may include a processor 51, a memory 52, a communication module 53, an input module 54, and a display module 55. Various components included in the computing devices 401 and 501 may be designed to be included in the housings of the computing devices 401 and 501.

The computing devices 401 and 501 are substantially the same as the computing devices 400 and 500 of FIG. 1, detailed description of the computing devices 401 and 501 is omitted herein.

### - Methods S400 and S500 of providing product-related information using LED of electronic shelf label

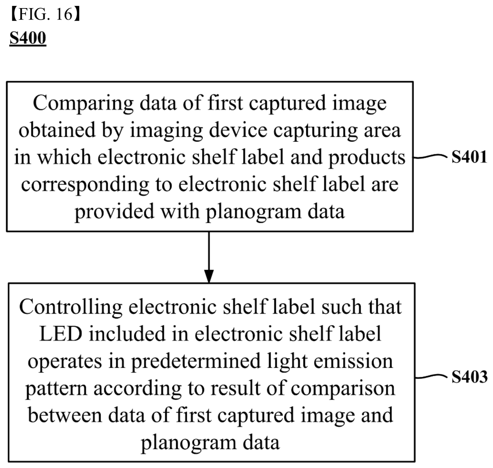

Hereinafter, methods of providing product-related information using the LED 10 of the electronic shelf label 101 through the product-related information provision application using the LED 10 of the electronic shelf label 101 executed by at least one processor 51 of the computing devices 401 and 501 according to various embodiments will be described in detail with reference to FIG. 16 to FIG. 27.

In various embodiments, the at least one processor 51 of the computing devices 401 and 501 may execute the product-related information provision application using the LED 10 of the electronic shelf label 101 stored in the memory 52 or operate the same in the background.

FIG. 16 is a flowchart illustrating a method S400 of providing product-related information using the LED 10 of the electronic shelf label 101 according to an embodiment.

Referring to FIG. 16, the method S400 of providing product-related information using the LED 10 of the electronic shelf label 101 may include step S401 of comparing data of the first captured image obtained by the imaging device 201 capturing an area in which the electronic shelf label 101 and products corresponding to the electronic shelf label 101 are provided with planogram data, and step S403 of controlling the electronic shelf label 101 such that the LED 10 included in the electronic shelf label 101 operates in a predetermined light emission pattern according to the result of comparison between the data of the first captured image and the planogram data.

In step S401 of comparing the data of the first captured image with the planogram data, the electronic shelf label 101 and the products provided to correspond to the electronic shelf label 101 included in the first captured image may be compared with the electronic shelf label 101 and products assigned to the electronic shelf label 101 included in a planogram.

The imaging device 201 may be controlled by the server 301 or the computing device 401 or 501 to capture the electronic shelf label 101 and the products provided to correspond to the electronic shelf label 101, and the imaging device 201 may transmit the data of the acquired first captured image to the server 301 and/or the computing device 401 or 501 via the network 601.

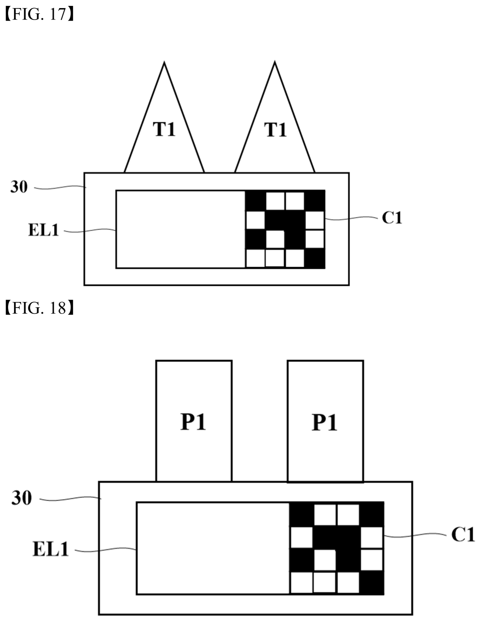

For example, referring to FIG. 17, the first captured image may include a first electronic shelf label EL1 provided at a first location and target products T1 placed to correspond to the first electronic shelf label EL1. Here, placement of the target products T1 corresponding to the first electronic shelf label EL1 may mean that the target products T1 are placed on the area of the shelf 30 where the first electronic shelf label EL1 is provided. However, the present disclosure is not limited thereto, and the target products T1 may be placed adjacent to the first electronic shelf label EL1 such that the target products T1 can be recognized as being related to the first electronic shelf label EL1.

Further, referring to FIG. 18, a planogram may include the first electronic shelf label EL1 provided at the first location and reference products P1 assigned thereto. The reference products P1 may be provided to correspond to the first electronic shelf label EL1.

In step S401, the target products T1 provided to correspond to the electronic shelf label 101 provided at the first location included in the first captured image may be compared with the reference products P1 assigned to the first electronic shelf label EL1 provided at the first location included in the planogram.

For example, as a result of comparing the target products T1 and the reference products P1 in step S401, it may be concluded that the target products T1 and the reference products P1 are different products (misplacement of products). However, the present disclosure is not limited thereto, and it may be concluded that the types of the target products T1 and the reference products P1 are the same, but the number of target products T1 and the number of reference products P1 are different (insufficient stock), or that the target products T1 do not present in the first captured image (products are out of stock).

In step S403 of controlling the electronic shelf label 101 such that the LED 10 operates in a predetermined light emission pattern according to the result of comparing the data of the first captured image with the planogram data, the electronic shelf label 101 may be controlled such that the LED 10 operates in various types of light emission patterns according to the result of comparing the first captured image with the planogram.

For example, if a first comparison result is derived in step S401 of comparing the data of the first captured image and the planogram data, the electronic shelf label 101 may be controlled such that the LED 10 operates in an light emission pattern corresponding to the first comparison result, and if a second comparison result different from the first comparison result is derived, the electronic shelf label 101 may be controlled such that the LED 10 operates in an light emission pattern corresponding to the second comparison result and different from the light emission pattern corresponding to the first comparison result.

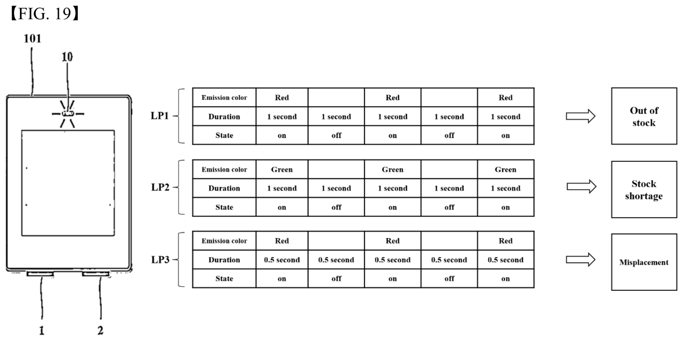

Referring to FIG. 19, various types of light emission patterns LP1, LP2, and LP3 of the LED 10 may be determined in various manners depending on combinations of operating states (on/off) of the LED 10, the durations of the operating states of the LED 10, and colors emitted from the LED 10.

For example, the LED 10 of the electronic shelf label 101 may operate in a first light emission LP1, a second light emission pattern LP2, and a third light emission pattern LP3. However, the present disclosure is not limited thereto, and the LED 10 may operate in countless light emission patterns other than the three listed in FIG. 19.

The various types of light emission patterns LP1, LP2, and LP3 of the LED 10 may correspond to different pieces of information related to products. For example, the various types of light emission patterns LP1, LP2, and LP3 may correspond to products being out of stock, a stock shortage, and misplacement.

At least one of the operating state of the LED 10, the duration of the operating state of the LED 10, and the color emitted from the LED 10 included in any one of the light emission patterns LP1, LP2, and LP3 may be different from at least one of the operating state of the LED 10, the duration of the operating state of the LED 10, and the color emitted from the LED 10 included in any other one of the light emission patterns LP1, LP2, and LP3.

The first light emission pattern LP1 may be a light emission pattern in which the LED 10 is turned on and off alternately at 1-second intervals for 5 seconds, starting from an on state, and the LED 10 emits red light when turned on.

For example, the first light emission pattern LP1 may correspond to out-of-stock products assigned to the electronic shelf label 101. Specifically, if it is detected that the products assigned to the electronic shelf label 101 are out of stock as a result of comparing the first captured image and the planogram in step S401, the LED 10 of the electronic shelf label 101 may be controlled to operate in the first light emission pattern LP1.

The second light emission pattern LP2 may be a light emission pattern in which the LED 10 is turned on and off alternately at 1-second intervals for 5 seconds, starting from the on state, and the LED 10 emits green light when turned on.

For example, the second light emission pattern LP2 may correspond to a shortage of stock of the products assigned to the electronic shelf label 101. Specifically, if a shortage of stock of the products assigned to the electronic shelf label 101 is detected as a result of comparing the first captured image with the planogram in step S401, the LED 10 of the electronic shelf label 101 may be controlled to operate in the second light emission pattern LP2.

The third light emission pattern LP3 may be a light emission pattern in which the LED 10 is turned on and off alternately at 0.5 second intervals for 2.5 seconds, starting from the on state, and the LED 10 emits red light when turned on.

For example, the third light emission pattern LP3 may correspond to misplacement of the products assigned to the electronic shelf label 101. Specifically, if misplacement of the products assigned to the electronic shelf label 101 is detected as a result of comparing the first captured image with the planogram in step S401, the LED 10 of the electronic shelf label 101 may be controlled to operate in the third light emission pattern LP3.

In this way, the electronic shelf label 101 may be controlled such that the LED 10 included in the electronic shelf label 101 operates in different light emission patterns based on the result of comparing the products provided to correspond to the electronic shelf label 101 with the products assigned to the electronic shelf label 101. Accordingly, store customers or on-site staff can visually recognize the light emission pattern of the LED 10 of the electronic shelf label 101 and intuitively ascertain information related to the products assigned to the electronic shelf label 101.

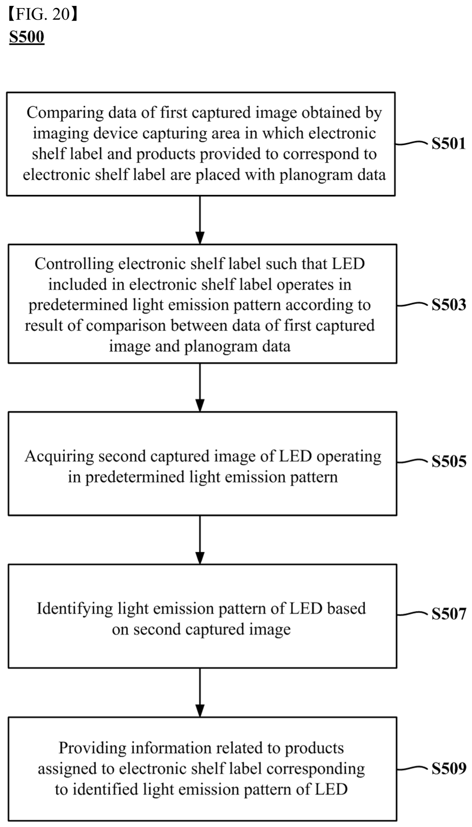

FIG. 20 is a flowchart illustrating a method S500 of providing product-related information using the LED 10 of the electronic shelf label 101 according to another embodiment.

Steps S501 and S503 included in the method S500 of FIG. 20 may be substantially the same as steps S401 and S403 included in the method S400 of FIG. 16. Therefore, in describing FIG. 20, redundant description with respect to FIG. 16 to FIG. 19 will be omitted.

Referring to FIG. 20, the method S500 of providing product-related information using the LED 10 of the electronic shelf label 101 includes step S501 of comparing data of a first captured image obtained by the imaging device 201 capturing an area in which the electronic shelf label 101 and products provided to correspond to the electronic shelf label 101 are placed with planogram data, step S503 of controlling the electronic shelf label 101 such that the LED 10 included in the electronic shelf label 101 operates in a predetermined light emission pattern according to the result of comparison between the data of the first captured image and the planogram data, step S505 of obtaining a second captured image of the LED 10 operating in the predetermined light emission pattern, step S507 of identifying the light emission pattern of the LED 10 based on the second captured image, and step S509 of providing information related to products assigned to the electronic shelf label 101 corresponding to the identified light emission pattern of the LED 10.

In step S505 of obtaining a second captured image of the LED 10, the imaging device 201 may be controlled to capture the LED 10 of the electronic shelf label 101, which is controlled to operate in a predetermined light emission pattern.

The imaging device 201 may transmit data of the acquired second captured image to the server 301 and/or the computing device 401 or 501 via the network 601. Accordingly, the server 301 and/or the computing device 401 or 501 may acquire the second captured image of the LED 10 included in the electronic shelf label 101, which operates in the predetermined light emission pattern.

In step S507 of identifying the light emission pattern of the LED 10 based on the second captured image, the light emission pattern identification module 46 of the server 301 may identify the light emission pattern of the LED 10 of the electronic shelf label 100 included in the second captured image.

The light emission pattern identification module 46 may identify the light emission pattern of the LED 10 of the electronic shelf label 101 from the captured image using, for example, a pattern extraction algorithm. Here, the light emission pattern of the LED 10 may be determined by a combination of an operating state (on/off) of the LED 10, the duration of the operating state of the LED 10, and the color emitted from the LED 10.

In step S509 of providing information related to products assigned to the electronic shelf label 101 corresponding to the identified light emission pattern of the LED 10, the processor 11 of the server 300 may extract product-related information corresponding to the light emission pattern identified by the light emission pattern identification module 46 from the light emission pattern database 45. The extracted product-related information may be transmitted to an external electronic device via the communication module 43.

For example, if the first light emission pattern LP1 is identified in step S507 of identifying the light emission pattern of the LED 10, first product-related information corresponding to the first light emission pattern LP1 may be provided in step S509 of providing product-related information.

Furthermore, if the second light emission pattern LP2 different from the first light emission pattern LP1 is identified in step S507 of identifying the light emission pattern of the LED 10, second product-related information corresponding to the second light emission pattern LP2 and different from the first product-related information may be provided in step S509 of providing product-related information.

Here, the product-related information may include any one of product misplacement, product inventory shortage, and product out-of-stock.

In this way, the product-related information provided in step S209 may vary depending on the type of light emission pattern of the LED 10 identified in step S507.

Meanwhile, in step S509 of providing product-related information, product-related information corresponding to the light emission pattern of the identified LED 10 may be displayed on the display module. Specifically, the product-related information extracted from the light emission pattern database 45 by the processor 41 may be transmitted to the electronic shelf label 101 and/or the computing device 401 or 501, and the product-related information may be displayed on the display module of the electronic shelf label 101 and/or the computing device 401 or 501.

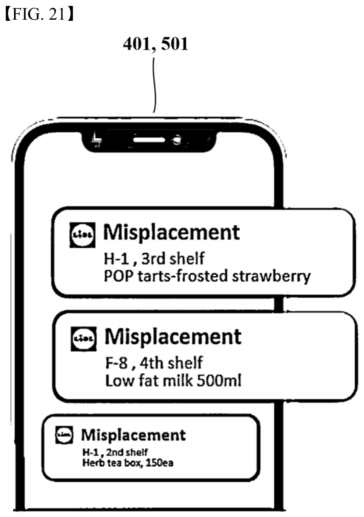

FIG. 21 is a flowchart illustrating step S501 of comparing data of the first captured image and planogram data in FIG. 20 according to an embodiment.

Referring to FIG. 21, step S501 of comparing data of the first captured image and planogram data may include step S5011 of identifying a pattern code PC displayed on the electronic shelf label 101 from the first captured image, step S5013 of obtaining location information assigned to the pattern code PC, step S5015 of detecting a target image, which is an image of an area corresponding to the location information in the first captured image, step S5017 of detecting a reference image, which is an image of an area corresponding to the location information in a planogram, and step S5019 of comparing the target image with the reference image.

In step S5011 of identifying a pattern code PC displayed on the electronic shelf label 101 from the captured image, the pattern code PC may be identified based on the first captured image obtained by the imaging device 201 controlled by the processor 41 of the server 301 to capture the area in which the electronic shelf label 101 and products provided on the shelf 30

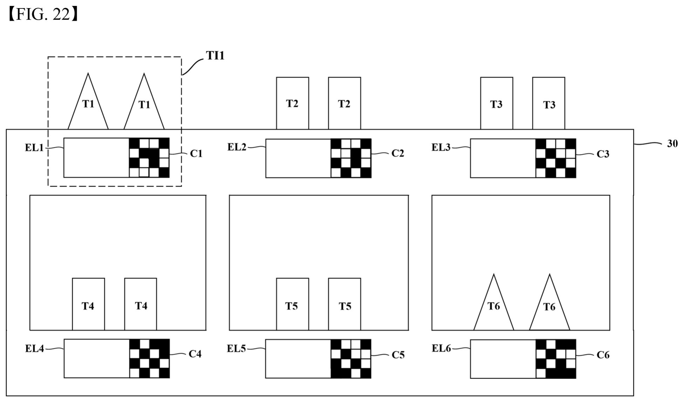

For example, referring to FIG. 22, the first captured image may include a plurality of electronic shelf labels EL1, EL2, EL3, EL4, EL5, and EL6 arranged on the shelf 30 and a plurality of products T1, T2, T3, T4, T5, and T6 provided to correspond to the plurality of electronic shelf labels EL1, EL2, EL3, EL4, EL5, and EL6. The imaging device 201 may transmit the acquired first captured image to the server 301 and/or the computing device 401 or 501 via the network 601.

In addition, in step S5011, the processor 41 of the server 301 may identify pattern codes C1, C2, C3, C4, C5, and C6 displayed on the electronic shelf labels 101 from the first captured image through image analysis. Here, the pattern codes C1, C2, C3, C4, C5, and C6 may be 2D codes. For example, the processor 41 may identify the first pattern code C1 among the plurality of pattern codes C1, C2, C3, C4, C5, and C6 included in the first captured image.

However, the present disclosure is not limited thereto, and the processor 51 of the computing device 401 or 501 may perform the step of identifying the pattern codes C1, C2, C3, C4, C5, and C6.

In step S5013 of obtaining location information assigned to the pattern code PC, the processor 41 of the server 300 may obtain location information assigned to the pattern codes C1, C2, C3, C4, C5, and C6 identified in step S5011 from the location information database 44. For example, the processor 41 may obtain location information assigned to the first pattern code C1 identified in step S5011.

However, the present disclosure is not limited thereto, and the processor 51 of the computing device 401 or 501 may obtain the location information assigned to the pattern codes C1, C2, C3, C4, C5, and C6 identified in step S5011 from the location information database 44.

In step S5015 of detecting a target image, the processor 41 of the server 301 may detect the target image from the first captured image based on the location information acquired in step S5013. The target image may be an image of an area corresponding to the location information acquired in step S5013.

For example, referring to FIG. 22, the processor 41 may detect a first target image TI1, which is an image of the area corresponding to the location information of the first pattern code C1, from the first captured image. In this case, the first target image TI1 may include the first electronic shelf label EL1 displaying the first pattern code C1 and a target product T1 provided in the area corresponding to the location information of the first pattern code C1.

However, the present disclosure is not limited thereto, and the processor 51 of the computing device 401 or 501 may detect a target image based on the location information of the identified pattern codes C1, C2, C3, C4, C5, and C6 acquired in step S5013.

In step S5017 of detecting a reference image, the processor 41 of the server 301 may detect the reference image from the planogram stored in the planogram database 47 based on the location information acquired in step S5013.

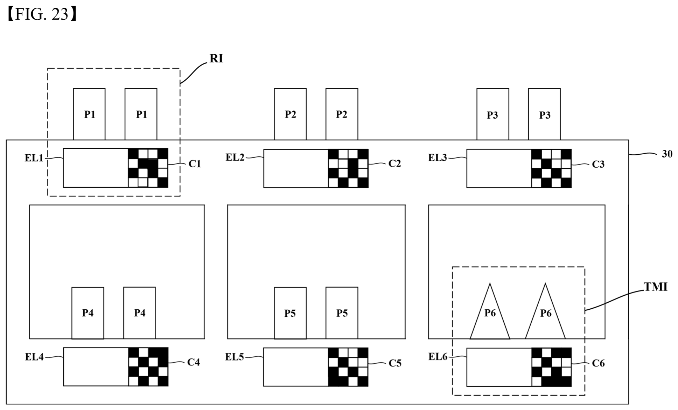

For example, referring to FIG. 23, the planogram may include display of a plurality of electronic shelf labels EL1, E21, EL3, EL4, EL5, and EL6 on a shelf 30 and a plurality of products P1, P2, P3, P4, P5, and P6 provided to correspond to the plurality of electronic shelf labels EL1, E21, EL3, EL4, EL5, and EL6. Each of the plurality of products P1, P2, P3, P4, P5, and P6 may be a product assigned to each of the plurality of electronic shelf labels EL1, E21, EL3, EL4, EL5, and EL6.

For example, the first product P1 may be assigned to the first electronic shelf label EL1, the second product P2 may be assigned to the second electronic shelf label EL2, the third product P3 may be assigned to the third electronic shelf label EL3, the fourth product P4 may be assigned to the fourth electronic shelf label EL4, the fifth product P5 may be assigned to the fifth electronic shelf label EL5, and the sixth product P6 may be assigned to the sixth electronic shelf label EL6.

In the planogram, the plurality of electronic shelf labels EL1, E21, EL3, EL4, EL5, and EL6 may display the plurality of pattern codes C1, C2, C3, C4, C5, and C6.

A reference image refers to an image including a plurality of electronic shelf labels EL1, E21, EL3, EL4, EL5, and EL6 and products P1, P2, P3, P4, P5, and P6 assigned to the plurality of electronic shelf labels EL1, E21, EL3, EL4, EL5, and EL6 in the planogram. The products P1, P2, P3, P4, P5, and P6 assigned to the plurality of electronic shelf labels EL1, E21, EL3, EL4, EL5, and EL6 may be referred to as reference products.

For example, referring to FIG. 23, the processor 41 may detect a reference image RI including the first electronic shelf label EL1 and the first reference products P1 assigned to the first electronic shelf label EL1.

However, the present disclosure is not limited thereto, and the processor 51 of the computing device 401 or 501 may detect the reference image RI from the planogram stored in the planogram database 47 based on the location information acquired in step S5013.

In step S5019 of comparing the target image with the reference image, the processor 51 of the server 301 may compare the target image with the reference image.

For example, the processor 41 may compare the first target image TI1 with the reference image RI. Here, the first target image TI1 and the reference image RI, which are comparison targets, may include the same first electronic shelf label EL1.

Based on the result of comparing the first target image TI1 with the reference image RI, the processor 41 may determine whether the target product T1 included in the first target image TI1 is identical to the reference product P1 included in the reference image RI.

However, the present disclosure is not limited thereto, and the processor 51 of the computing device 401 or 501 may also compare the target image with the reference image.

For example, if the type of the target product included in the target image is determined to be different from the type of the reference product included in the reference image in step S5019 of comparing the target image with the reference image, alarm information regarding misplacement of the reference product for the area corresponding to the location information assigned to the pattern code PC may be provided in step S509 of providing product-related information in the method S500.

For example, referring to FIG. 22 and FIG. 23, in step S5019, the target product T1 included in the first target image TI1 and the reference product P1 included in the reference image RI may be determined to be different from each other. Specifically, the reference product P1 assigned to the first electronic shelf label EL1 must be displayed in the area corresponding to the location information of the first electronic shelf label EL1, but misplacement of the product may occur if a customer or on-site staff places the target product T1 different from the reference product P1 in the area corresponding to the location information of the first electronic shelf label EL1.

In this way, if the processor 41 of the server 301 determines in step S5019 that the type of the target product T1 included in the first target image TI1 and the type of the reference product P1 included in the reference image RI are different from each other, the processor 41 may provide misplacement alarm information regarding the product for the area corresponding to the location information assigned to the first pattern code C1 of the first electronic shelf label EL1 to the computing device 401 or 501.

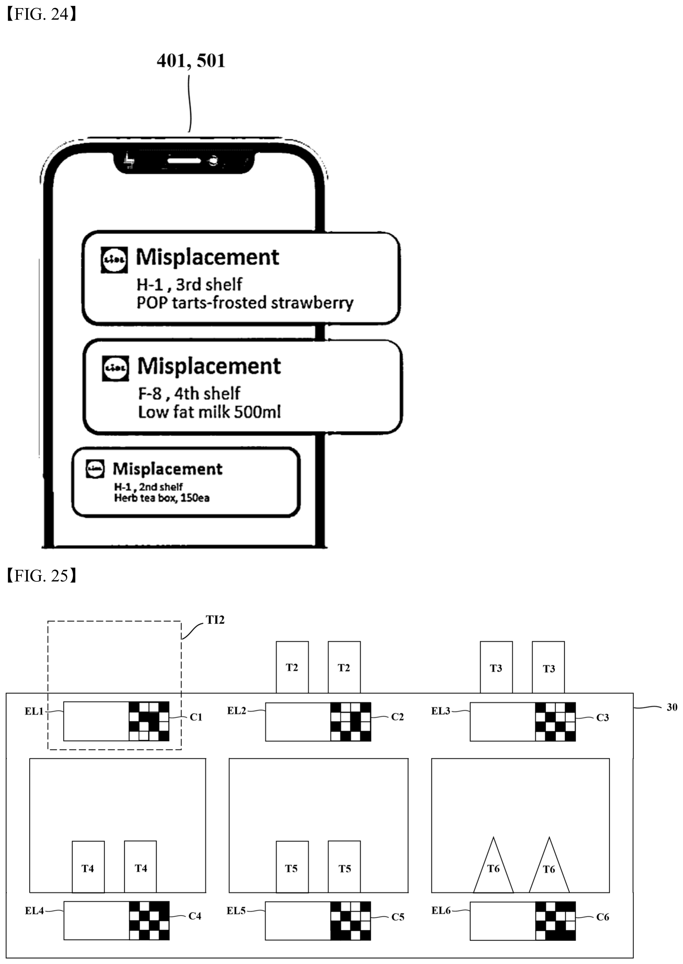

Referring to FIG. 24, product misplacement alarm information may be displayed on the computing device 401 or 501. For example, information indicating a location where a specific product is misplaced may be displayed on the computing device 401 or 501. However, the present disclosure is not limited thereto, and there are various methods of displaying misplacement alarm information on the computing device 401 and 501.

However, the present disclosure is not limited thereto, and if the processor 51 of the computing device 401 or 501 determines in step S5019 that the type of the target product T1 included in the first target image TI1 and the type of the reference product P1 included in the reference image RI are different from each other, the processor may provide misplacement alarm information regarding the reference product for the area corresponding to the location information assigned to the pattern code PC to the computing device 401 or 501.

Additionally, in step S5019, the processor 41 of the server 301 may detect a target matching image TMI including an image of a target matching product P6 identical to the target product T1 determined to be different from the reference product P1 from the planogram database 47.

For example, referring to FIG. 22 and FIG. 23, the processor 41 may detect the target matching image TMI including an image of the target matching product P6 identical to the target product T1 determined to be different from the reference product P1 from the planogram through image analysis. The target matching image TMI may include a target matching electronic shelf label EL6 to which the target matching product P6 is assigned.

The processor 41 may provide data regarding location information assigned to the pattern code C6 of the target matching electronic shelf label EL6 to which the target matching product P6 is assigned to the computing device 401 or 501. Accordingly, a user using the computing device 401 or 501 can obtain information indicating a location where a misplaced product should originally be placed.

However, the present disclosure is not limited thereto, and the processor 51 of the computing device 401 or 501 may detect the target matching image TMI, which is an image including the target matching product P6 that is identical to the target product T1 determined to be different from the reference product P1, from the planogram database 47 and provide data regarding the location information assigned to the pattern code C6 of the target matching electronic shelf label EL6 included in the target matching image TMI to the computing device 401 or 501.

In addition, if the processor 41 of the server 301 determines in step S5019 that the target image does not include any product, including the reference product P1, the processor may provide reference product out-of-stock alarm information with respect to the area corresponding to the location information assigned to the pattern code PC to the computing device 401 or 501.

For example, referring to FIG. 25, the processor 41 may detect a second target image TI2 that does not include any product as an image of the area corresponding to the location information of the first pattern code C1 from the first captured image.

If the processor 41 determines that the second target image TI2 does not include any product, including the reference product P1, the processor 41 may transmit reference product out-of-stock alarm information with respect to the area corresponding to the location information assigned to the first pattern code C1 of the first electronic shelf label EL1 included in the second target image TI2 to the computing device 401 or 501. Accordingly, a user using the computing device 401 or 501 can obtain information indicating that products assigned to the first electronic shelf label EL1 are out of stock.

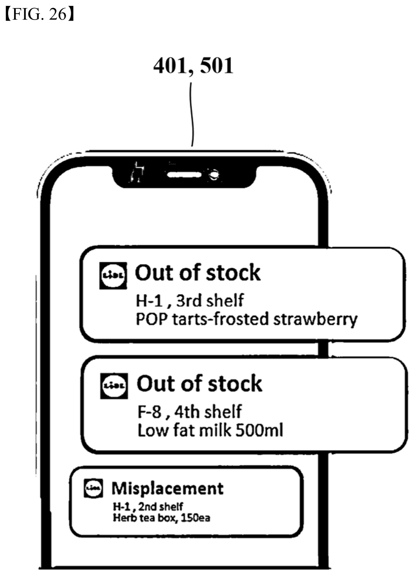

For example, referring to FIG. 26, product out-of-stock alarm information may be displayed on the computing device 401 or 501. For example, information regarding whether a specific product at a specific location is out of stock may be displayed on the computing device 401 or 501. However, the present disclosure is not limited thereto, and there are various methods of displaying product out-of-stock alarm information on the computing device 401 or 501.

However, the present disclosure is not limited thereto, and if the processor 51 of the computing device 401 or 501 determines that the target image does not include any products, including the reference product P1, the processor may provide reference product out-of-stock alarm information with respect to the area corresponding to the location information assigned to the pattern code PC to the computing device 401 or 501.

Furthermore, the method S500 may further include a step of receiving a product order user input for ordering an out-of-stock reference product and a step of transmitting the product order user input to an external seller server.

For example, if an out-of-stock alarm for the reference product P1 is displayed on the computing device 401 or 501 in step S509, the user may press a button on the first electronic shelf label EL1 to transmit a product order user input to an order user input processing unit (not shown) of the server 301.

However, the present disclosure is not limited thereto, and when the user clicks on a product order tab displayed on the computing device 401 or 501, the product order user input may be transmitted to the order user input processing unit of the server 301.

The order user input processing unit of the server 301 may transmit the product order user input received from the user to an external seller server (not shown). The external seller server may receive the product order user input from the order user input processing unit of the server 301, and a seller may perform product delivery based on the received product order user input.

Furthermore, if the processor 41 of the server 301 determines in step S5019 that the type of the target products included in the target image is the same as the type of the reference products P1 included in the reference image RI, and the number of target products is equal to or less than a threshold value, the processor 41 may provide stock shortage alarm information for the reference products with respect to the area corresponding to the location information assigned to the pattern code PC.

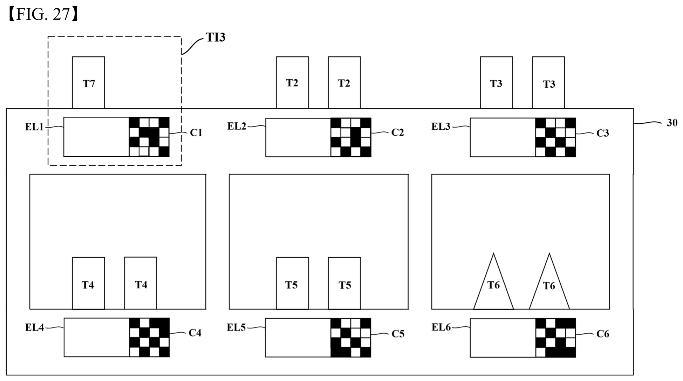

For example, referring to FIG. 27, the processor 41 may detect a third target image TI3 including a target product T7 of the same type as reference products P1 but different in number from the number of reference products P1 as an image of the area corresponding to the location information of the first pattern code C1 from a captured image.

For example, referring to FIG. 23 and FIG. 27, if the processor 41 determines that the type of the target product T7 included in the third target image TI3 is the same as the type of the reference products P1 included in the reference image RI and that the number of target products T7 is equal to or less than the threshold value, the processor 41 may transmit stock shortage alarm information regarding the reference products with respect to the area corresponding to the location information assigned to the first pattern code C1 of the first electronic shelf label EL1 included in the third target image TI3 to the computing device 401 or 501. Accordingly, a user using the computing device 401 or, 501 can obtain information indicating stock shortage of the products assigned to the first electronic shelf label EL1.

Meanwhile, the method S500 may further include a step of transmitting a pattern code display signal to the electronic shelf labels 101, and a step of capturing, by the imaging device 201, an image of an area in which electronic shelf labels 101 and products are placed on the shelf 30 to obtain a captured image if the electronic shelf labels 101 displays pattern codes C1, C2, C3, C4, C5, and C6 based on the pattern code display signal.

For example, the electronic shelf labels 101 may display only product-related information and may not display the pattern codes C1, C2, C3, C4, C5, and C6. If the pattern code display signal from the imaging device 201 or a separate signal transmission device is transmitted to the electronic shelf labels 101, the electronic shelf labels 101 may display the pattern codes C1, C2, C3, C4, C5, and C6 on portions of the surfaces of the display modules. After the pattern codes C1, C2, C3, C4, C5, and C6 are displayed on the electronic shelf labels 101, the imaging device 201 may capture the area in which the electronic shelf labels 101 and products are provided to obtain the first captured image.

The embodiments of the present disclosure described above may be implemented in the form of program instructions executable by various computer components and recorded on a computer-readable recording medium. The computer-readable recording medium may include program instructions, data files, data structures, and the like, either singly or in combination. The program instructions recorded on the computer-readable recording medium may be specifically designed and configured for the present disclosure or may be known and usable by those skilled in the art of computer software. Examples of computer-readable recording media include magnetic media such as hard disks, floppy disks, and magnetic tapes, optical recording media such as CD-ROMs and DVDs, magneto-optical media such as floptical disks, and hardware devices specifically configured to store and execute program instructions, such as ROMs, RAMs, and flash memories. Examples of program instructions include not only machine language codes such as those generated by a compiler, but also high-level language codes that can be executed by a computer using an interpreter or the like. Hardware devices may be modified to one or more software modules to perform processing according to the present disclosure, and vice versa.

The specific implementations described herein are exemplary embodiments and do not limit the scope of the present disclosure in any way. For the sake of brevity, descriptions of conventional electronic components, control systems, software, and other functional aspects of the systems may be omitted. Furthermore, the lines or connecting elements between components depicted in the drawings are merely illustrative of functional connections and/or physical or circuit connections. In actual devices, these connections may be replaced or represented as various additional functional, physical, or circuit connections. Furthermore, unless specifically stated as "essential," "important," or the like, a component may not be absolutely necessary for the application of the present disclosure.

Although the detailed description of the present disclosure has been made with reference to preferred embodiments of the present disclosure, it will be understood by those skilled in the art or those with ordinary knowledge in the art that various modifications and variations can be made to the present disclosure without departing from the spirit and scope of the present disclosure as set forth in the claims. Therefore, the technical scope of the present disclosure should not be limited to the details set forth in the detailed description of the specification, but should be defined by the scope of the claims.

### [Industrial Applicability]

The present disclosure has industrial applicability in that it enables more efficient management of electronic shelf labels by correlating information about an event related to an electronic shelf label with a light emission pattern of the LED of the electronic shelf label and identifying the light emission pattern of the LED of the electronic shelf label to easily obtain information about the event related to the electronic shelf label.

Furthermore, the present disclosure has industrial applicability in that it enables more efficient management of electronic shelf labels by identifying a light emission pattern of the LED included in an electronic shelf label, which is controlled to emit light depending on the display state of products to easily obtain information about the display state of products assigned to the electronic shelf label.

## Claims

1. A method of providing event information related to an electronic shelf label, performed by a processor of a computing device linked to the electronic shelf label, the method comprising:
acquiring a captured image of an LED included in the electronic shelf label;
identifying a light emission pattern of the LED based on the captured image; and
providing information regarding an event related to the electronic shelf label corresponding to the identified light emission pattern of the LED.

2. The method of providing event information related to an electronic shelf label according to claim 1, wherein the light emission pattern of the LED is determined by a combination of an operating state of the LED, a duration of the operating state of the LED, and a color emitted from the LED.

3. The method of providing event information related to an electronic shelf label according to claim 2, wherein information on a first event corresponding to a first light emission pattern is provided in the providing information regarding an event if the first light emission pattern is identified in the identifying a light emission pattern of the LED, and
information on a second event corresponding to a second light emission pattern and different from the first event is provided in the providing information regarding an event if the second light emission pattern different from the first light emission pattern is identified in the identifying a light emission pattern of the LED.

4. The method of providing event information related to an electronic shelf label according to claim 3, wherein at least one of an operating state of the LED, a duration of the operating state of the LED, or a color emitted from the LED included in the first light emission pattern is different from at least one of an operating state of the LED, a duration of the operating state of the LED, or a color emitted from the LED included in the second light emission pattern.

5. The method of providing event information related to an electronic shelf label according to claim 1, wherein the event related to the electronic shelf label includes a state in which a remaining energy level of a battery included in the electronic shelf label is equal to or less than a threshold value.

6. The method of providing event information related to an electronic shelf label according to claim 1, wherein the event related to the electronic shelf label includes a state in which a remaining period until an expiration date of a product assigned to the electronic shelf label is equal to or less than a threshold period.

7. The method of providing event information related to an electronic shelf label according to claim 1, wherein the event related to the electronic shelf label includes an event regarding a stock status of a product assigned to the electronic shelf label.

8. The method of providing event information related to an electronic shelf label according to claim 7, wherein the event regarding the stock status includes any one of misplacement of the product, a stock shortage of the product, and the product being out of stock.

9. The method of providing event information related to an electronic shelf label according to claim 1, wherein the providing information regarding an event comprises displaying the information regarding the event, corresponding to the identified light emission pattern of the LED and obtained from a light emission pattern database, on a display module.

10. The method of providing event information related to an electronic shelf label according to claim 1, further comprising:
receiving an event occurrence alarm signal indicating occurrence of the event; and
controlling an imaging device to capture an image of the LED operating in the light emission pattern upon receiving the event occurrence alarm signal.

11. The method of providing event information related to an electronic shelf label according to claim 1, further comprising:
receiving an event occurrence alarm signal indicating occurrence of the event; and
controlling the electronic shelf label such that the LED included in the electronic shelf label operates in a predetermined light emission pattern corresponding to the event upon receiving the event occurrence alarm signal.

12. The method of providing event information related to an electronic shelf label according to claim 11, wherein the electronic shelf label is controlled such that the LED operates in the first light emission pattern in the controlling the electronic shelf label if a first event occurrence alarm signal indicating occurrence of the first event is received in the receiving an event occurrence alarm signal, and
the electronic shelf label is controlled such that the LED operates in the second light emission pattern different from the first light emission pattern in the controlling the electronic shelf label if a second event occurrence alarm signal indicating occurrence of the second event is received in the receiving an event occurrence alarm signal.

13. A system for providing event information related to an electronic shelf label, the system comprising:
an electronic shelf label including an LED;
an imaging device; and
a computing device including a processor configured to perform a method of providing information on an event related to the electronic shelf label by identifying a light emission pattern of the LED based on a captured image of the electronic shelf label captured by the imaging device,
wherein the processor performs:
acquiring a captured image of the electronic shelf label;
identifying the light emission pattern of the LED based on the captured image; and
providing information on the event corresponding to the identified light emission pattern of the LED.

14. The system for providing event information related to an electronic shelf label according to claim 13, wherein the LED included in the electronic shelf label is configured to operate in a light emission pattern corresponding to the event based on detection of occurrence of the event.
